# EUROPEAN PATENT APPLICATION

(11) **EP 3 349 503 A1**
(43) Date of publication of application: **18.07.2018**
(21) Application number: 16844052.7
(22) Date of filing: 21.07.2016
(51) Int. Cl.: H04W 28/04, H04W 16/28

(54) **WIRELESS COMMUNICATION DEVICE, INFORMATION PROCESSING DEVICE, COMMUNICATION SYSTEM, INFORMATION PROCESSING METHOD AND PROGRAM**

(30) Priority: 07.09.2015 JP 2015175900
(71) Applicant: Sony Corporation, Tokyo 108-0075 (JP)
(72) Inventor: SATO, Masanori, Tokyo 108-0075 (JP); ITOH, Katsutoshi, Tokyo 108-0075 (JP)
(74) Representative: Witte, Weller & Partner Patentanwälte mbB
(86) International application number: PCT/JP2016/071365
(87) International publication number: WO 2017/043188

(57) **Abstract**

An acknowledgement response for data is appropriately transmitted. A radio communication apparatus includes a control unit. The radio communication apparatus determines whether data transmitted from a first radio communication apparatus satisfies a predetermined condition. In addition, in a case where the data transmitted from the first radio communication apparatus satisfies the predetermined condition, the control unit of the radio communication apparatus controls an acknowledgement response for the data to be transmitted to the first radio communication apparatus on the basis of a reception timing of retransmitted data of the data transmitted from the first radio communication apparatus.

## Description

### TECHNICAL FIELD

The present technology relates to a radio communication apparatus, and more particularly, to a radio communication apparatus, an information processing apparatus, a communication system, an information processing method, and a program for causing a computer to execute the method, which treat information about radio communication.

### BACKGROUND ART

Heretofore, an acknowledgement response (ACK) has been generally used as a method for enhancing the reliability of data communication. For example, a device which has transmitted data receives the ACK to acknowledge that the data has reached a counterpart device. In addition, if the device which has transmitted the data cannot receive the ACK, the device can retransmit the data.

In this case, in a network environment, data transmitted by a transmission-side device can be received by a plurality of base stations. For example, in a case where the data reception in the plurality of base stations is successful, each of the base stations transmits the ACK. Thus, when each of the base stations which have successfully received data transmits the ACK, the transmission-side device may have difficulty in receiving the ACK from each base station due to interference between the ACKs. Accordingly, for example, the number of base stations to transmit the ACK may be limited to one.

In addition, shortening of the reception operation time in the transmission-side device that is waiting for the ACK leads to a reduction in power consumption of the transmission-side device. Accordingly, in a case where the ACK is returned, it is important to return the ACK within a short time after a time when data is received.

For example, in the Institute of Electrical and Electronic Engineers (IEEE) 802.11 (WLAN), base stations and transmission-side devices perform a procedure called Association before performing data communication, and the base stations and the transmission-side devices are associated on a one-to-one basis. Accordingly, data transmitted from each transmission-side device can be received by a plurality of base stations, and it can be decided whether the base stations transmit an ACK response on the basis of the associated relationship by Association. This prevents occurrence of an interference due to the transmission of the ACK by the plurality of base stations.

On the other hand, in view of power consumption in the transmission-side device, the Association procedure is required, and thus extra power is consumed. Further, in a case where the transmission-side device moves, when the radio transmission range of the base station is exceeded, there is a need to perform Association with another base station again. In this case, more power is consumed.

Thus, in IEEE802.11 (WLAN), the procedure called Association is required and power consumption in the radio device is increased by an amount equal to power consumed for the procedure. Further, in a radio sensor network or the like, the radio device is required to be downsized and driven for a longtime, and thus it is important to reduce power consumption in the radio device.

Further, for example, in the 3rd Generation Partnership Project (3GPP) standards (public network, mobile phone), the radio device can communicate with a plurality of base stations . Accordingly, for example, in a case where the radio device is present in the vicinity of a boundary between base stations, the plurality of base stations receives a signal from the radio device.

However, also in this case, a primary base station and a secondary base station are distinguished from each other, and the primary base station is basically used as the base station to control the radio device. The primary base station can transmit a signal to the radio device through the secondary base station via a dedicated line connecting the base stations. Accordingly, in a public network, a plurality of base stations can receive the signal and the optimum base station can return the ACK to the radio device.

For example, a communication method in which access points communicate with each other at a high speed via a communication medium (a dedicated wire, an optical fiber or network) with a less waiting time is proposed (e.g., see Patent Document 1).

### CITATION LIST

### PATENT DOCUMENT

Patent Document 1: PCT Japanese Translation Patent Publication No. 2005-535254

### SUMMARY OF THE INVENTION

### PROBLEMS TO BE SOLVED BY THE INVENTION

In the related art described above, the ACK can be returned to the transmission-side device through another base station via a dedicated line connecting base stations.

However, in a case where the ACK is returned as described above, there is a need for a dedicated line connecting base stations, which leads to an increase in the cost of the entire system.

Accordingly, for example, a communication system using another inexpensive line (e.g., Internet connection) instead of using a dedicated line to connect base stations may be used. However, in the Internet connection, a delay longer than that when a dedicated line is used occurs and it is difficult to control the delay, and thus there is a possibility that the ACK cannot be appropriately transmitted.

The present technology has been made in view of the above-mentioned circumstances, and an object of the present technology is to appropriately transmit an acknowledgement response for data.

### SOLUTIONS TO PROBLEMS

The present technology has been made to solve the above-described problems, a first aspect of the present technology includes a radio communication apparatus including a control unit configured to perform control in such a manner that, in a case where data transmitted from a first radio communication apparatus satisfies a predetermined condition, an acknowledgement response for the data is transmitted to the first radio communication apparatus on the basis of a reception timing of retransmitted data of the data transmitted from the first radio communication apparatus, an information processing method for the radio communication apparatus, and a program for causing a computer to execute the method. This provides an operation that in a case where the data transmitted from the first radio communication apparatus satisfies the predetermined condition, the acknowledgement response for the data is transmitted to the first ratio communication apparatus on the basis of the reception timing of retransmitted data of the data transmitted from the first radio communication apparatus.

Further, in the first aspect, the control unit may determine that the predetermined condition is satisfied in a case where received power of the data has a value within a predetermined range and the received power of the data reaches a maximum value in a plurality of reception devices including the radio communication apparatus having received the data. This provides an operation that it is determined that the predetermined condition is satisfied in a case where the received data of the data has a value within the predetermined range and the received power of the data reaches the maximum value in the plurality of reception devices having received the data.

Further, in the first aspect, the control unit may transmit information about the data to an information processing apparatus configured to perform selection processing for selecting a reception device having a maximum value for the received power of the data in a plurality of reception devices having received data, in a case where the received power of the data has a value within a predetermined range, and may determine whether to transmit the acknowledgement response for the data to the first radio communication apparatus, on the basis of a result of the selection processing in the information processing apparatus. This provides an operation that in a case where the received power of the data has a value within the predetermined range, information about the data is transmitted to the information processing apparatus, and it is determined whether the acknowledgement response for the data is transmitted to the first radio communication apparatus on the basis of the result of the selection processing in the information processing apparatus.

Further, in the first aspect, the plurality of reception devices and the information processing apparatus may be connected with a general-purpose line. This provides an operation that the information about the data is transmitted via a general-purpose line.

Further, in the first aspect, the control unit may perform control in such a manner that, in a case where received power of the data is larger than a first threshold, the acknowledgement response is transmitted on the basis of the reception timing of the data; in a case where the received power of the data is smaller than the first threshold and is larger than a second threshold that is smaller than the first threshold, the acknowledgement response is transmitted at the reception timing of the retransmitted data on the basis of whether the data satisfies the predetermined condition; and in a case where the received power of the data is smaller than the second threshold, the acknowledgement response is not transmitted. This provides an operation that in a case where the received power of the data is larger than the first threshold, the acknowledgement response is transmitted on the basis of the reception timing of the data; in a case where the received power of the data is smaller than the first threshold and is larger than the second threshold, the acknowledgement response is transmitted at the reception timing of the retransmitted data on the basis of whether the data satisfies the predetermined condition; and in a case where the received power of the data is smaller than the second threshold, the acknowledgement response is not transmitted.

Further, in the first aspect, the first threshold and the second threshold may be set on the basis of a position between a plurality of reception devices including the radio communication apparatus having received the data. This provides an operation that the first threshold and the second threshold which are set on the basis of a position between a plurality of reception devices having received the data are used.

Further, a second aspect of the present technology includes an information processing apparatus including: a communication unit configured to receive data from a radio communication apparatus, the communication unit being connectable to a plurality of reception devices to transmit an acknowledgement response for the data to the radio communication apparatus; and a selection unit configured to select, from among the plurality of reception devices, a reception device to transmit an acknowledgement response for the data at a reception timing of retransmitted data of the data from the radio communication apparatus, on the basis of received power of the data in the plurality of reception devices, an information processing method for the information processing apparatus, and a program for causing a computer to execute the method. This provides an operation that the reception device to transmit the acknowledgement response for the data at the reception timing of retransmitted data from the radio communication apparatus is selected on the basis of the received power of the data in the plurality of reception devices.

Further, in the second aspect, the reception device may transmit, to the information processing apparatus, the received power of the data and transmission information indicating whether the acknowledgement response for the data is transmitted, as a reception result of the data, and the selection unit may select a reception device to transmit the acknowledgement response on the basis of the received power and the transmission information included in the reception result. This provides an operation that the reception device to transmit the acknowledgement response is selected on the basis of the received power and transmission information included in the reception result.

Further, in the second aspect, the selection unit may determine whether reception devices having transmitted the acknowledgement response are present on the basis of the transmission information, in a case where the reception devices having transmitted the acknowledgement response are present, the selection unit may select a reception device to subsequently transmit the acknowledgement response from among the reception devices having transmitted the acknowledgement response, on the basis of the received power of the data in the reception devices having transmitted the acknowledgement response, and in a case where the reception devices having transmitted the acknowledgement response are not present, the selection unit may select a reception device to transmit the acknowledgement response on the basis of the received power of the data in the plurality of reception devices. This provides an operation that in a case where the reception device having transmitted the acknowledgement response is present, the reception device to subsequently transmit the acknowledgement response is selected on the basis of the received power of the data in the reception device having transmitted the acknowledgement response, and in a case where the reception device having transmitted the acknowledgement response is not present, the reception device to transmit the acknowledgement response is selected on the basis of the received power of the data in the plurality of reception devices.

Further, a third aspect of the present technology includes a radio communication apparatus including: a radio communication unit configured to transmit data to a reception device and receive an acknowledgement response for the data from the reception device; and a control unit configured to determine that transmission of the data is successful in a case where the acknowledgement response for the data is received from the reception device after retransmitted data of the data is transmitted to the reception device, an information processing method for the radio communication apparatus, and a program for causing a computer to execute the method. This provides an operation that it is determined that the transmission of the data is successful in a case where the acknowledgement response for the data is received from the reception device after the retransmitted data of the data is transmitted to the reception device.

Further, a fourth aspect of the present technology includes a communication system including: a transmission device configured to transmit data to a reception device and receive an acknowledgement response for the data from the reception device; a reception device configured to transmit information about received power of the data to an information processing apparatus and determine whether to transmit the acknowledgement response for the data to the transmission device on the basis of a result of selection processing in the information processing apparatus; and an information processing apparatus configured to select, from among a plurality of reception devices, a reception device to transmit the acknowledgement response for the data at a reception timing of retransmitted data of the data from the transmission device, on the basis of the received power of the data in the plurality of reception devices, and to notify the plurality of reception devices of a result of the selection, an information processing method for the communication system, and a program for causing a computer to execute the method. This provides an operation that the transmission device transmits data to the reception device and receives the acknowledgement response for the data from the reception device; the reception device transmits the information about the received power of the data to the information processing apparatus and determines whether the acknowledgement response for the data is transmitted to the transmission device on the basis of the result of the selection processing in the information processing apparatus; and the information processing apparatus selects the reception device to transmit the acknowledgement response for the data at the reception timing of retransmitted data of the data from the transmission device on the basis of the received power in a plurality of reception devices, and notifies the plurality of reception devices of the result of the selection.

### EFFECTS OF THE INVENTION

According to the present technology, an advantageous effect that an acknowledgement response for data can be appropriately transmitted can be obtained. Note that advantageous effects described herein are not particularly limited and any of the advantageous effects described in the present disclosure can be obtained.

### BRIEF DESCRIPTION OF DRAWINGS

Fig. 1 is a diagram illustrating an example of a radio system configuration of a communication system 10 according to a first embodiment of the present technology.
Fig. 2 is a block diagram illustrating a functional configuration example of a radio communication apparatus 100 according to the first embodiment of the present technology.
Fig. 3 is a block diagram illustrating a functional configuration example of a base station 200 according to the first embodiment of the present technology.
Fig. 4 is a block diagram illustrating a functional configuration example of a server 300 according to the first embodiment of the present technology.
Fig. 5 is a diagram illustrating a configuration example of a radio data frame to be exchanged between the radio communication apparatus 100 and base stations 200 and 210 in the first embodiment of the present technology.
Fig. 6 is a graph schematically illustrating an example of a relationship between the position of the radio communication apparatus 100 and received power calculated in the base stations 200 and 210 according to the first embodiment of the present technology.
Fig. 7 is a graph schematically illustrating an example of a relationship between the position of each of the base stations 200 and 210 and thresholds TH1 and TH2 according to the first embodiment of the present technology.
Fig. 8 is a graph schematically illustrating an example of a relationship between the position of each of the base stations 200 and 210 and the thresholds TH1 and TH2 according to the first embodiment of the present technology.
Fig. 9 is a diagram illustrating an example of transmission timing of an ACK transmitted from the base stations 200 and 210 according to the first embodiment of the present technology.
Fig. 10 is a table illustrating an example of a reception result transmitted from the base stations 200 and 210 to the server 300 according to the first embodiment of the present technology.
Fig. 11 is a table illustrating an example of a reception result transmitted from the base stations 200 and 210 to the server 300 according to the first embodiment of the present technology.
Fig. 12 is a table illustrating an example of a determination result transmitted from the server 300 to the base stations 200 and 210 according to the first embodiment of the present technology.
Fig. 13 is a diagram illustrating an example of exchange of information in each device constituting a communication system 10 according to the first embodiment of the present technology.
Fig. 14 is a flowchart illustrating an example of a processing procedure of ACK transmission determination processing performed by the base station 200 according to the first embodiment of the present technology.
Fig. 15 is a flowchart illustrating an example of a processing procedure of determination processing performed by the server 300 according of the first embodiment of the present technology.
Fig. 16 is a flowchart illustrating an example of a processing procedure of ACK transmission determination processing performed by the base station 200 according to a second embodiment of the present technology.
Fig. 17 is a block diagram illustrating an example of a schematic configuration of a smartphone.
Fig. 18 is a block diagram illustrating a schematic configuration example of a car navigation apparatus.
Fig. 19 is a block diagram illustrating a schematic configuration of a wireless access point.

### MODE FOR CARRYING OUT THE INVENTION

Modes for carrying out the present technology (hereinafter referred to as embodiments) will be described below. The description is made in the following order.
1. First Embodiment (an example where, where data transmitted from a radio communication apparatus satisfies a predetermined condition, base stations transmit an acknowledgement response on the basis of a reception timing of retransmitted data of the data)
2. Second Embodiment (a case where the amount of information in a radio data frame is reduced to thereby reduce a time required for transmitting data and reduce power consumption in the radio communication apparatus)
3. Application Examples

### <1. First Embodiment>

### [Configuration Example of Communication System]

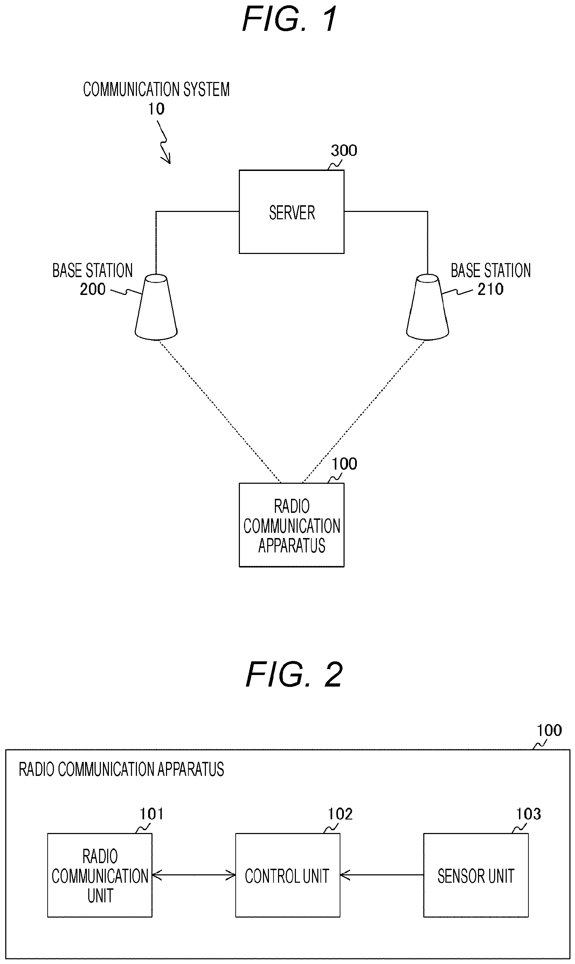

Fig. 1 is a diagram illustrating an example of a radio system configuration of a communication system 10 according to a first embodiment of the present technology.

The communication system 10 includes a radio communication apparatus 100, a base station 200, a base station 210, and a server 300. Note that the radio communication apparatus 100 is an example of each of a first radio communication apparatus and a transmission device set forth in the scope of claims. In addition, the base stations 200 and 210 are examples of a radio communication apparatus and a reception device set forth in the scope of claims . Further, the server 300 is an example of an information processing apparatus set forth in the scope of claims.

Further, the radio communication apparatus 100 and the base stations 200 and 210 are connected using a radio communication. Further, the base stations 200 and 210 and the server 300 are connected using wired communication (e.g., Internet connection) or radio communication (e.g., mobile phone communication network). In this manner, the base stations 200 and 210 and the server 300 can be connected with various types of general-purpose lines.

As the radio communication apparatus 100, for example, a portable or fixed information processing apparatus or electronic device including a radio communication function can be used. Note that the portable information processing apparatus (electronic device) is an information processing apparatus such as a smartphone, a mobile phone, or a tablet terminal, and the fixed information processing apparatus (electronic device) is an information processing apparatus such as a printer or a personal computer.

Further, as the radio communication apparatus 100, for example, an electronic device with small power consumption can be used. As the electronic device with small power consumption, for example, Bluetooth (registered trademark) low energy (BLE) for transmitting sensor information (e.g., a pulse, a body temperature, a position) can be used. In addition, the electronic device may be a device that is attachable to a human or animal. Further, the electronic device can, for example, acquire sensor information regularly or irregularly, and transmit the sensor information to another device (e.g., a sensor information management server) via the base stations 200 and 210 by using radio communication.

Further, the radio communication apparatus 100 may be, for example, each sensor device used for Internet of Things (IOT). This sensor device may be, for example, a watching device. This watching device is, for example, a child watching device (e.g., attached to a school bag), or an elderly person watching device (e.g., a wandering sensing device)). This watching device can, for example, acquire positional information regularly or irregularly and transmit the positional information to another device (e.g., a human management server) via the base stations 200 and 210 by using radio communication.

Further, the sensor device used for IOT may be, for example, a device constituting an animal management system (e.g., a cattle management system). For example, the cattle management system can acquire positional information and living body information (e.g., a pulse, a potential hydrogen or power of hydrogen (pH)) and transmit the pieces of information to another device (e.g., a cattle management server) via the base stations 200 and 210 by using radio communication.

Further, the sensor device used for IOT may be, for example, a device (e.g., anti-theft device) mounted on a vehicle. This anti-theft device, which is used for, for example, anti-theft, can acquire positional information regularly or irregularly and transmit the positional information to another device (e.g., a vehicle management server) via the base stations 200 and 210 by using radio communication.

In this case, batteries for many of the sensor devices used for IOT are not replaced for several years. For example, in the cattle management system, it is assumed that batteries for the sensor device attached to cattle are not replaced during the period in which the cattle are alive. Accordingly, it is important for the sensor device used for IOT to reduce power consumption.

Further, each of the base stations 200 and 210 and the server 300 may be, for example, an information processing apparatus such as a server, a personal computer, a tablet terminal, or a smartphone.

Note that Fig. 1 illustrates an example of the communication system 10 including two base stations 200 and 210. However, the first embodiment of the present technology can be applied to a communication system including three or more base stations. Further, Fig. 1 illustrates an example of the communication system 10 including one radio communication apparatus 100. However, the first embodiment of the present technology can be applied to a communication system including two or more radio communication apparatuses.

### [Configuration Example of Radio Communication Apparatus]

Fig. 2 is a block diagram illustrating a functional configuration example of the radio communication apparatus 100 according to the first embodiment of the present technology.

The radio communication apparatus 100 includes a radio communication unit 101, a control unit 102, and a sensor unit 103.

The radio communication unit 101 transmits and receives radio signals. For example, the radio communication unit 101 modulates a radio frame generated by the control unit 102, changes the radio frame into a carrier frequency, and emits the carrier frequency as a radio wave. Further, for example, the radio communication unit 101 receives a radio wave from the outside, demodulates the radio wave, and outputs the demodulated radio wave to the control unit 102. For example, the radio communication unit 101 transmits data to the base stations 200 and 210 and receives an acknowledgement response (ACK) for the data from the base stations 200 and 210.

The control unit 102 controls each unit of the radio communication apparatus 100 on the basis of control programs stored in a memory (not illustrated). The control unit 102 is implemented by, for example, a central processing unit (CPU) . For example, the control unit 102 generates a radio frame to be transmitted, and analyzes the received radio frame. Further, the control unit 102 performs retransmission processing on the basis of the analysis result.

The sensor unit 103 acquires various information and outputs the acquired information to the control unit 102. For example, in a case where the sensor unit 103 is a global positioning system (GPS) sensor, the sensor unit 103 acquires positional information (e.g., latitude, longitude, and altitude) about the radio communication apparatus 100. Further, for example, in a case where the sensor unit 103 is a temperature sensor, the sensor unit 103 acquires temperature information.

In this case, a timing when the sensor unit 103 acquires information may be, for example, a timing based on a request from the control unit 102, or a periodic timing. For example, the control unit 102 can periodically request the sensor unit 103 to execute acquisition of information. Further, in a case where the information acquired regularly or irregularly is changed, the sensor unit 103 may output the acquired information to the control unit 102.

### [Configuration Example of Base Station]

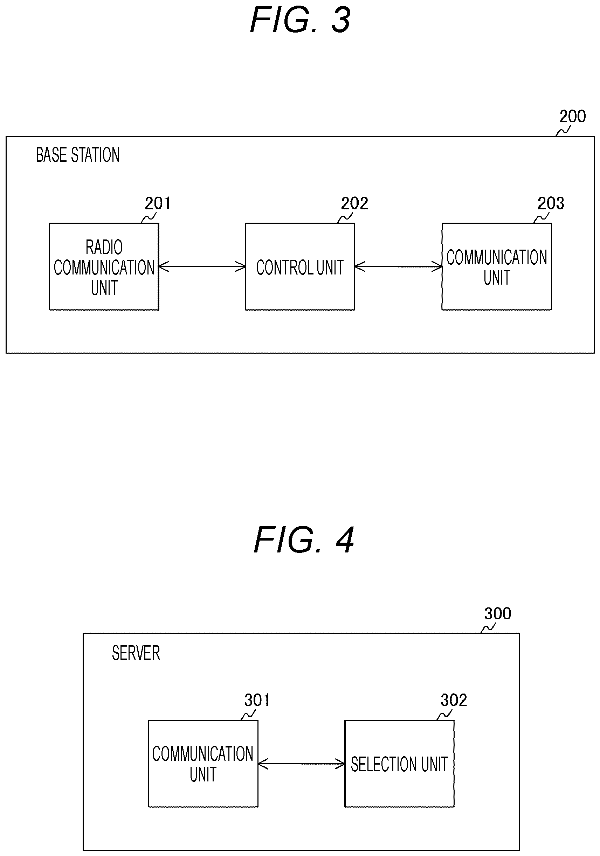

Fig. 3 is a block diagram illustrating a functional configuration example of the base station 200 according to the first embodiment of the present technology. Note that the configuration of the base station 210 is the same as that of the base station 200, and thus the description thereof is herein omitted.

The base station 200 includes a radio communication unit 201, a control unit 202, and a communication unit 203.

The radio communication unit 201 transmits and receives radio signals. For example, the radio communication unit 201 modulates a radio frame generated by the control unit 202, changes the radio frame into a carrier frequency, and emits the carrier frequency as a radio wave. Further, for example, the radio communication unit 201 receives a radio wave from the outside, demodulates the radio wave, and outputs the demodulated radio wave to the control unit 202.

The control unit 202 controls each unit of the base station 200 on the basis of control programs stored in a memory (not illustrated) . The control unit 202 is implemented by, for example, a CPU. For example, the control unit 202 generates a radio frame to be transmitted and analyzes the received radio frame. Further, for example, the control unit 202 generates and receives information to be exchanged with the server 300 via the communication unit 203. Further, for example, the control unit 202 can measure received power of a signal received by the radio communication unit 201 and can use the received power. Note that the received power is information indicating the strength of a received signal and can be recognized as a received signal strength (e.g., a received signal strength indicator (RSSI)).

For example, in a case where data transmitted from the radio communication apparatus 100 satisfies a predetermined condition, the control unit 202 controls an acknowledgement response (ACK) for the data to be transmitted to the radio communication apparatus 100 on the basis of a reception timing of retransmitted data of the data.

The communication unit 203 is a communication unit that transmits and receives various information to and from the server 300 by using wired communication or radio communication.

### [Configuration Example of Server]

Fig. 4 is a block diagram illustrating a functional configuration example of the server 300 according to the first embodiment of the present technology.

The server 300 includes a communication unit 301 and a selection unit 302.

The communication unit 301 is a communication unit that transmits and receives various information to and from the base stations 200 and 210 by using wired communication or radio communication. Thus, the communication unit 301 is connected to the plurality of base stations 200 and 210 that receive data from the radio communication apparatus 100 and transmit an acknowledgement response (ACK) for the data to the radio communication apparatus 100.

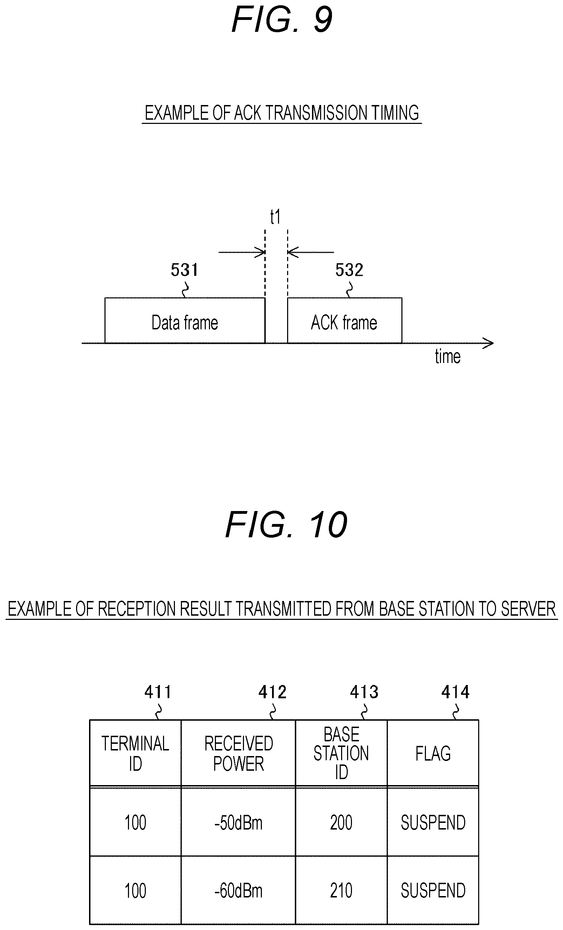

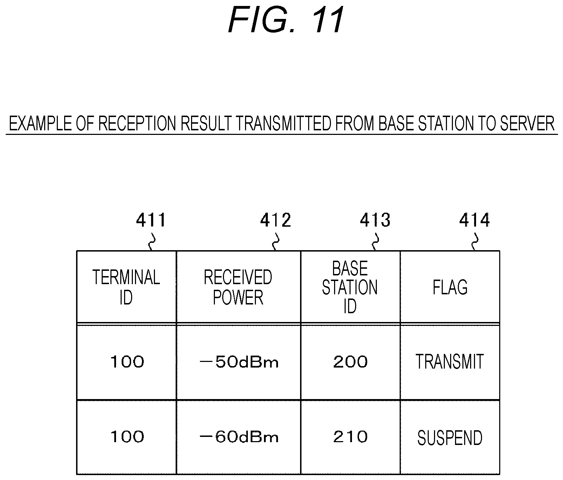

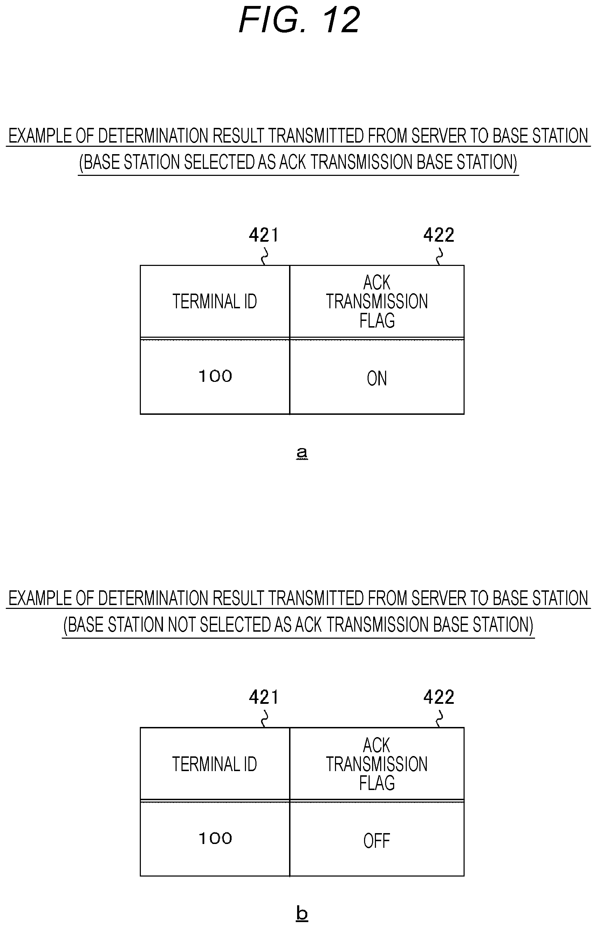

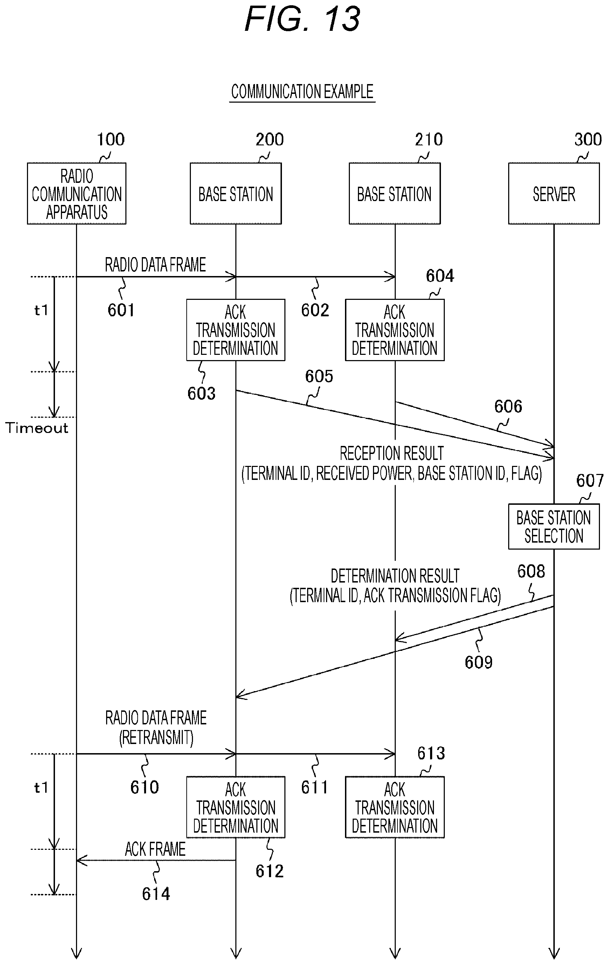

The selection unit 302 performs selection processing (indicated by reference numeral 607 in Fig. 13) for selecting a base station to transmit the ACK on the basis of information (e.g., reception results illustrated in Figs. 10 and 11) received from the base stations 200 and 210. Then, on the basis of the result of the selection processing, the selection unit 302 generates information (a determination result illustrated in Fig. 12) to be returned to the base stations 200 and 210. The communication unit 301 notifies the base stations 200 and 210 of the generated information (the determination result illustrated in Fig. 12.

### [Configuration Example of Radio Data Frame]

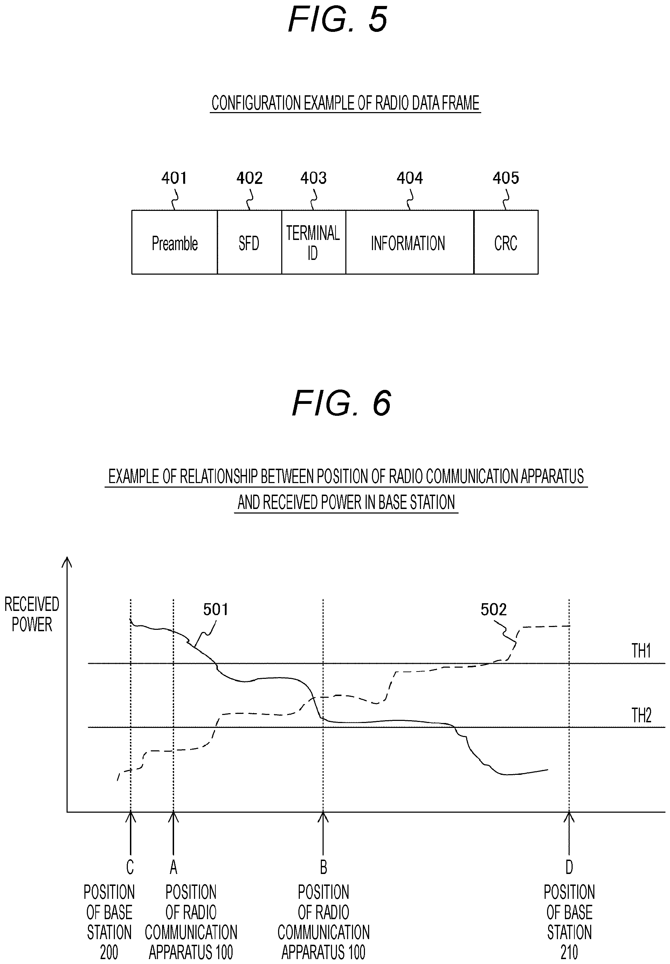

Fig. 5 is a diagram illustrating a configuration example of a radio data frame to be exchanged between the radio communication apparatus 100 and the base stations 200 and 210 according to the first embodiment of the present technology.

The radio data frame includes a preamble 401, a start frame delimiter (SFD) 402, a terminal identification (ID) 403, information 404, and a cyclic redundancy check (CRC) 405.

The preamble 401 includes a known pattern used for a reception-side device to detect a radio frame. The reception-side device calculates a correlation between the known pattern and the received signal, thereby making it possible to detect a frame.

The SFD 402 is a known pattern indicating a break of a field. The reception-side device can discriminate a start point of a subsequent field by detecting the SFD 402.

The terminal ID 403 is unique identification information allocated to each radio communication apparatus.

The information 404 stores various information. For example, the information 404 stores information acquired by the sensor unit 103. In this case, for example, information acquired by the sensor unit 103 may be directly stored in the field of the information 404, or information subjected to signal processing for enhancing reception characteristics may be stored in the field of the information 404. Note that the signal processing for enhancing the reception characteristics is, for example, error correction or interleaving.

The CRC 405 is information to be added to determine whether the reception-side device has properly received a frame.

### [An example of a relationship between the position of the radio communication apparatus and received power in the base stations]

Fig. 6 is a graph schematically illustrating an example of a relationship between the position of the radio communication apparatus 100 and received power calculated in the base stations 200 and 210 according to the first embodiment of the present technology.

A vertical axis in Fig. 6 is an axis representing values of received power calculated in the base stations 200 and 210. Further, a horizontal axis in Fig. 6 is an axis representing the position of the radio communication apparatus 100. Further, on the horizontal axis in Fig. 6, the position of the base station 200 is represented by a position C and the position of the base station 210 is represented by a position D.

In this case, a radio wave attenuates according to a distance. For example, in a case where the radio communication apparatus 100 is located at a position A, the distance between the radio communication apparatus 100 and the base station 200 is short. Accordingly, the attenuation of the radio wave transmitted from the radio communication apparatus 100 (attenuation in the base station 200) is small, and the received power measured in the base station 200 has a large value. In Fig. 6, the transition of the received power measured in the base station 200 is indicated by a solid line 501.

Further, for example, in a case where the radio communication apparatus 100 is located at the position A, the distance between the radio communication apparatus 100 and the base station 210 is long. Accordingly, the attenuation of the radio wave transmitted from the radio communication apparatus 100 (attenuation in the base station 210) is large, and the received power measured in the base station 210 has a small value. In Fig. 6, the transition of the received power measured in the base station 210 is indicated by a broken line 502.

In this case, in a case where the base stations return the ACK, it is considered that the transmission of the ACK from the base station located near the radio communication apparatus 100 can increase the success rate of receiving the ACK. For example, in a case where the radio communication apparatus 100 is located at the position A, one of the base stations 200 and 210 that is located closer to the radio communication apparatus 100, i.e., the base station 200, transmits the ACK, thereby making it possible to increase the success rate of receiving the ACK.

Further, for example, in a case where the radio communication apparatus 100 is located at the position A, if one of the base stations 200 and 210 that is located farther from the radio communication apparatus 100, i.e., the base station 210, transmits the ACK, an interference may occur. Accordingly, it is preferable to prevent the base station 210, which is located farther from the radio communication apparatus 100, from transmitting the ACK.

Thus, since the base station located closer to the radio communication apparatus 100 transmits the ACK and the base station located farther from the radio communication apparatus 100 is prevented from transmitting the ACK, thresholds TH1 and TH2 are used in the first embodiment of the present technology. The thresholds TH1 and TH2 are thresholds used as determination indices in the situation as described above . Note that the threshold TH1 is an example of a first threshold set forth in the scope of claims. Further, the threshold TH2 is an example of a second threshold set forth in the scope of claims.

In this case, the attenuation of the radio wave varies roughly depending on a distance, but also may vary from moment to moment depending on the environment between the radio communication apparatus 100 and the base stations 200 and 210. Accordingly, in a case where the radio communication apparatus 100 is located at a position B (i.e., located in the vicinity of a halfway point between the base stations 200 and 210), it is difficult for the base stations 200 and 210 to determine which one of the base stations has a larger received power.

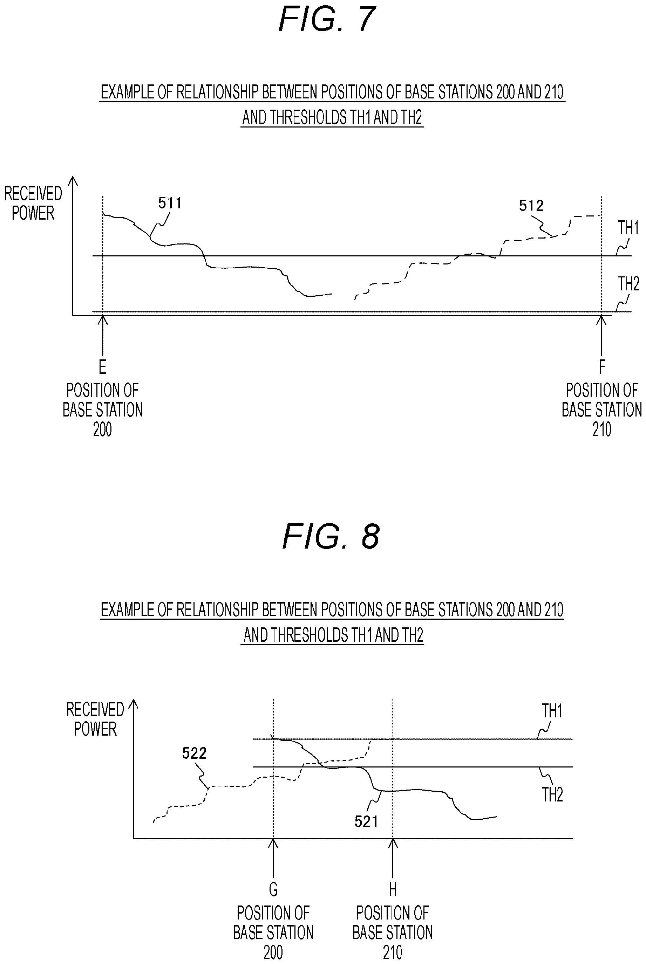

Accordingly, in the first embodiment of the present technology, in a case where the thresholds TH1 and TH2 are set with a wide range and a value falls within the thresholds TH1 and TH2, the determination by the server 300 is performed without performing the determination of return of the ACK in each of the base stations 200 and 210. Figs. 7 and 8 each illustrate an example of deciding the thresholds TH1 and TH2.

### [Example for deciding thresholds]

Figs. 7 and 8 are graphs each schematically illustrating an example of a relationship between the position of each of the base stations 200 and 210 and the thresholds TH1 and TH2 according to the first embodiment of the present technology. Fig. 7 illustrates an example where the distance between the base stations 200 and 210 is long (a case where a distance between a position E of the base station 200 and a position F of the base station 210 is large). Further, Fig. 8 illustrates an example where the distance between the base stations 200 and 210 is short (a case where a distance between a position G of the base station 200 and a position H of the base station 210 is short).

As illustrated in Fig. 7, in a case where the distance between the base stations 200 and 210 is long, the attenuation from the base stations 200 and 210 is large, which facilitates the determination as to which one of the base stations 200 and 210 is located closer. Accordingly, both the thresholds TH1 and TH2 can be set to small values.

As illustrated in Fig. 8, in a case where the distance between the base stations 200 and 210 is short, the attenuation from the base stations 200 and 210 is small, which makes it difficult to determine which one of the base stations 200 and 210 is located closer. Accordingly, both the thresholds TH1 and TH2 need to be set to large values.

Thus, the thresholds TH1 and TH2 can be decided depending on the distance between the base stations 200 and 210. Specifically, the thresholds TH1 and TH2 can be set on the basis of the position between the plurality of reception devices including the base stations 200 and 210 that receive data.

Note that the method for deciding the thresholds TH1 and TH2 is merely an example, and the thresholds TH1 and TH2 may be decided by another decision method, or the thresholds TH1 and TH2 may be decided by a user operation. Further, the thresholds TH1 and TH2 may be set as fixed values, or variable values that can be changed on the basis of a communication environment or the like.

Further, for example, the thresholds TH1 and TH2 can be set to constantly perform ACK transmission determination in the server 300 by setting the threshold TH1 to a value larger than the received power that can be observed in each base station, and by setting the threshold TH2 to a value smaller than the received power that can be observed in each base station.

### [Transmission Timing Example of ACK]

Fig. 9 is a diagram illustrating an example of a transmission timing of the ACK transmitted from the base stations 200 and 210 in the first embodiment of the present technology.

As illustrated in Fig. 9, in a case where the base stations 200 and 210 receive a radio data frame 531 from the radio communication apparatus 100, the base stations 200 and 210 transmit an ACK frame 532 at a timing when a time t1 has elapsed form the reception.

In this case, shortening of the time t1 leads to a reduction in time for the radio communication apparatus 100 which has transmitted the radio data frame 531 to wait for the ACK in a receivable state. Thus, a reduction power consumption in the radio communication apparatus 100 can be achieved.

Further, in a frequency band (e.g., 920 MHz) used for a radio sensor network, it is required to perform carrier sensing for acknowledging that there is no other transmission before a transmission is performed. However, there is an exemption that, in the case of transmitting the ACK within 2 ms, there is no need to perform carrier sensing.

Accordingly, the transmission can be reliably started by returning the ACK within 2 ms. Further, this results in a reduction in time for the radio communication apparatus 100 to wait for the ACK.

### [Example of Reception Result]

Figs. 10 and 11 are tables each illustrating an example of a reception result transmitted from the base stations 200 and 210 to the server 300 according to the first embodiment of the present technology.

Figs. 10 and 11 illustrate an example where a terminal ID 411, a received power 412, a base station ID 413, and a flag 414 are transmitted to the server 300 from the base stations 200 and 210 as the reception result.

The terminal ID 411 is identification information for identifying the radio communication apparatus that transmits a radio data frame to each of the base stations 200 and 210. This terminal ID is included in the radio data frame received by the base stations 200 and 210 (terminal ID 403 illustrated in Fig. 5). Note that Figs. 10 and 11 illustrate an example where the terminal ID 411 of the radio communication apparatus 100 is "100" for ease of explanation.

The received power 412 is a value indicating the received power of the radio data frame received by the base stations 200 and 210. Specifically, the received power 412 is received power of the radio data frame measured in each of the base stations 200 and 210.

The base station ID 413 is identification information (e.g., ID information unique to each base station) for identifying the base station that receives the radio data frame . Note that Figs. 10 and 11 illustrate an example where, for ease of explanation, the base station ID 413 of the base station 200 is represented by "200" and the base station ID 413 of the base station 210 is represented by "210".

The flag 414 is information indicating whether the base station that has received the radio data frame has transmitted the ACK for the radio data frame, or indicating whether the transmission is suspended. In other words, the flag 414 is transmission information indicating whether to transmit an acknowledgement response (ACK) for the radio data frame. Note that in Figs. 10 and 11, for ease of explanation, a case where the ACK for the radio data frame is transmitted is referred to as "transmit", and a case where the transmission of the ACK for the radio data frame is suspended is referred to as "suspend".

### [Example of Determination Result]

Fig. 12 is a table illustrating an example of a determination result transmitted from the server 300 to the base stations 200 and 210 according to the first embodiment of the present technology.

Fig. 12 illustrates an example where a terminal ID 421 and an ACK transmission flag 422 are transmitted, as a determination result, from the server 300 to the base stations 200 and 210. a of Fig. 12 illustrates an example of the determination result transmitted to the base station that is selected as the base station to transmit the ACK. Further, b of Fig. 12 illustrates an example of the determination result transmitted to the base station that is not selected as the base station to transmit the ACK.

The terminal ID 421 is identification information for identifying the radio communication apparatus that transmits the radio data frame to the base stations 200 and 210. Note that the terminal ID 421 corresponds to the terminal ID 411 illustrated in Figs. 10 and 11.

The ACK transmission flag 422 is information indicating the determination result as to whether the base station that has received the radio data frame transmits the ACK for the radio data frame . Note that in Fig. 12, for ease of explanation, the ACK transmission flag 422 transmitted to the base station that is selected as the base station to transmit the ACK is represented as "ON", and the ACK transmission flag 422 transmitted to the base station that is not selected as the base station to transmit the ACK is represented as "OFF".

### [Communication Example]

Fig. 13 is a diagram illustrating an example of information exchange in each device constituting the communication system 10 in the first embodiment of the present technology.

First, the radio communication unit 101 of the radio communication apparatus 100 transmits the radio data frame (601, 602). In this case, the control unit 102 of the radio communication apparatus 100 sets a time-out period (e.g., t1 + α).

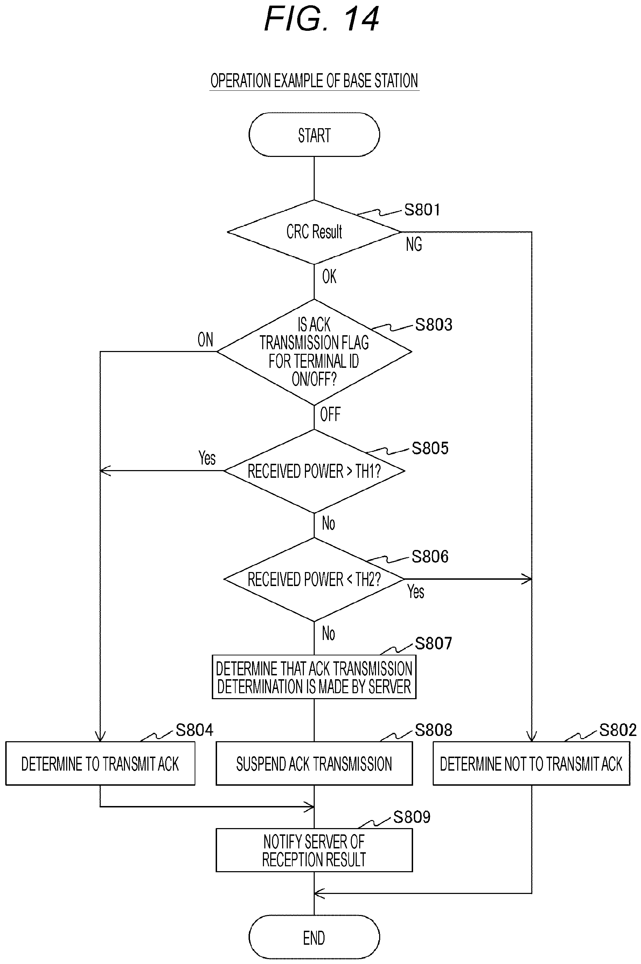

The radio communication unit 201 of the base station 200 receives the radio data frame from the radio communication apparatus 100 (601). Further, the control unit 202 of the base station 200 performs ACK transmission determination processing on the basis of the received radio data frame (603) . This ACK transmission determination processing will be described in detail with reference to Fig. 14.

Subsequently, the communication unit 203 of the base station 200 transmits the ACK transmission determination processing result (reception result) to the server 300 (605) . In this case, as illustrated in Figs. 10 and 11, the control unit 202 of the base station 200 controls the transmission of the reception result including the terminal ID 411, the received power 412, the base station ID 413, and the flag 414 (605) .

Similarly, the base station 210 that has received the radio data frame performs ACK transmission determination processing (604). Subsequently, the base station 210 transmits the result of the ACK transmission determination processing to the server 300 (606).

In this case, Fig. 13 illustrates an example where it is determined in the ACK transmission determination processing that both the base stations 200 and 210 do not transmit the ACK. Accordingly, assume that the base station 200 transmits, as a reception result, pieces of information in the same row as the base station ID 413 "200" illustrated in Fig. 10 (605) . Also assume that the base station 210 transmits, as a reception result, pieces of information in the same row as the base station ID 413 "210" illustrated in Fig. 10 (606).

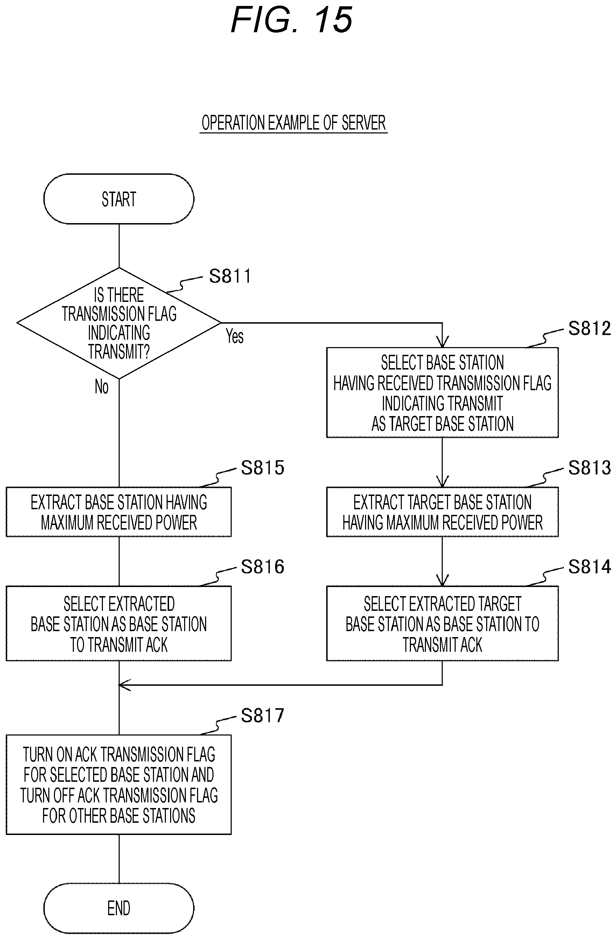

The communication unit 301 of the server 300 receives the reception results from the base stations 200 and 210, respectively (605, 606). Further, the selection unit 302 of the server 300 can recognize whether the ACK for the terminal ID has been transmitted, on the basis of the reception results from the base stations 200 and 210. Further, the selection unit 302 of the server 300 performs selection processing for selecting a base station to transmit the ACK (607) . Fig. 13 illustrates an example where the base station 200 is selected as the base station to transmit the ACK. Note that this selection processing will be described in detail with reference to Fig. 15.

Subsequently, the communication unit 301 of the server 300 transmits the determination result of the selection processing to the base stations 200 and 210 (608, 609). In this case, as illustrated in Fig. 12, the communication unit 301 of the server 300 transmits the determination result including the terminal ID 421 and the ACK transmission flag 422 (608, 609).

In Fig. 13, the base station 200 is selected as the base station to transmit the ACK, and thus the server 300 transmits the determination result (ACK transmission flag 422 "ON") illustrated in a of Fig. 12 to the base station 200 (609). Further, the server 300 transmits the determination result (ACK transmission flag 422 "OFF") illustrated in b of Fig. 12 to the base station 210 (608) . Further, each of the base stations 200 and 210 holds the received determination result.

As described above, it is determined in the ACK transmission determination processing that both the base stations 200 and 210 do not transmit the ACK, and the server 300 performs ACK transmission determination. Further, in a case where the server 300 and the base stations 200 and 210 are connected with a general-purpose line (e.g., Internet connection), a delay of several 100 ms may occur. Accordingly, in a case where the ACK transmission determination is performed through the server 300, the base stations 200 and 210 cannot transmit the ACK in a short time (e.g., time t1 illustrated in Fig. 9).

Thus, since the ACK cannot be transmitted in a short time (e.g., time t1 illustrated in Fig. 9), the radio communication apparatus 100 does not receive the ACK for the transmitted radio data frame. That is, an ACK waiting time times out. Accordingly, the control unit 102 of the radio communication apparatus 100 performs retransmission processing for retransmitting the radio data frame (610, 611) . Also in this case, the control unit 102 of the radio communication apparatus 100 sets a time-out period.

The control unit 202 of the base station 200 that has received the radio data frame performs ACK transmission determination processing (612). In this case, the base station 200 holds the determination result of the ACK transmission flag "ON" for the terminal ID "100". Accordingly, the radio communication unit 201 of the base station 200 transmits an ACK frame to the radio communication apparatus 100 (614) . Also in this case, the communication unit 203 of the base station 200 transmits the reception result to the server 300. Thus, the control unit 202 of the base station 200 determines in the ACK transmission determination processing that the ACK is transmitted (612), and performs transmission processing for transmitting the ACK (614). Accordingly, the base station 200 transmits, as a reception result, pieces of information in the same row of the base station ID 413 "200" illustrated in Fig. 11.

Thus, after transmitting the retransmitted data of the radio data frame to the base stations 200 and 210, the radio communication apparatus 100 receives an acknowledgement response (ACK) for the data from any one of the base stations. In this case, the control unit 102 of the radio communication apparatus 100 determines that the transmission of the radio data frame is successful. Note that this control procedure is an example of a control procedure for determination set forth in the scope of claims.

Further, the base station 210 that has received the radio data frame performs ACK transmission determination processing (613). In this case, the base station 210 holds the determination result of the ACK transmission flag "OFF" for the terminal ID "100". Accordingly, the base station 210 does not transmit the ACK frame to the radio communication apparatus 100. Also in this case, the base station 210 transmits the reception result to the server 300. Thus, the base station 210 determines in the ACK transmission determination processing that the ACK is not transmitted (613) . Accordingly, the base station 210 transmits, as a reception result, pieces of information in the same row as the base station ID 413 "210" illustrated in Fig. 11.

### [Operation Example of Radio Communication Apparatus (Transmission Example of Radio Data Frame)]

For example, the sensor unit 103 acquires sensor information to be transmitted and outputs the acquired sensor information to the control unit 102. Subsequently, the control unit 102 generates a radio data frame on the basis of the sensor information acquired by the sensor unit 103. In this case, the sensor information acquired by the sensor unit 103 is stored in the information 404 illustrated in Fig. 5. Subsequently, the radio communication unit 101 transmits, to the base stations 200 and 210, the radio data frame including the sensor information acquired by the sensor unit 103, on the basis of the control of the control unit 102.

### [Operation Example of Base Station]

The radio communication unit 201 of the base station 200 receives the signal (radio data frame) transmitted from the radio communication apparatus 100. Similarly, the radio communication unit of the base station 210 receives the signal (radio data frame) transmitted from the radio communication apparatus 100.

The control unit 202 of the base station 200 detects the received signal (radio data frame). Specifically, the control unit 202 of the base station 200 calculates a correlation between a known pattern of a preamble and the preamble 401 (illustrated in Fig. 5) in the received signal (radio data frame), thereby enabling detection of the received signal (radio data frame). In this case, the control unit 202 of the base station 200 calculates received power of the received signal (radio data frame). For example, the correlation value obtained by the calculation described above may be used as the received power.

Upon detection of a frame, the control unit 202 of the base station 200 calculates the correlation between the received signal and the SFD pattern, and detects a break of the frame. The control unit 202 of the base station 200 extracts the terminal ID 403, the information 404, and the CRC 405 (illustrated in Fig. 5) on the basis of the detected break of the frame. Note that in a case where the signal processing (e.g., error correction, interleaving) as described above is performed on the field of the information 404, the demodulation processing is carried out.

Subsequently, the control unit 202 of the base station 200 calculates the CRC on the basis of the extracted pieces of information, and the CRC obtained by the calculation is compared with the extracted CRC 405 (illustrated in Fig. 5) . This enables the control unit 202 of the base station 200 to determine whether the frame can be properly received.

The base station 210 performs these reception processing similarly.

Subsequently, the base stations 200 and 210 perform acknowledgement response (ACK) transmission determination processing (ACK transmission determination processing). An example of this ACK transmission determination processing is illustrated in Fig. 14.

### [Operation Example of Base Stations (Example of ACK Transmission Determination Processing)]

Fig. 14 is a flowchart illustrating an example of a processing procedure of ACK transmission determination processing executed by the base station 200 in the first embodiment of the present technology.

First, the control unit 202 of the base station 200 performs ACK transmission determination on the basis of the result of the CRC (step S801). Specifically, if the frame cannot be properly received (step S801; NG), the control unit 202 determines that the ACK is not transmitted (step S802) .

On the other hand, if the frame can be properly received (step S801; OK), the control unit 202 acknowledges the ACK transmission flag included in the determination result of the server 300 (step S803). Specifically, the control unit 202 determines whether the terminal ID included in the received radio frame matches the terminal ID included in the determination result of the server 300, and whether the ACK transmission flag (ACK transmission flag 422 illustrated in Fig. 12) indicates ON or OFF (step S803). In other words, the control unit 202 determines whether the ACK transmission flag (ACK transmission flag 422 illustrated in Fig. 12) for the terminal ID of the device that has transmitted the frame indicates ON or OFF (step S803) . Note that this determination processing (step S803) is omitted in a case where the determination result transmitted from the server 300 is not held.

If the terminal ID included in the received radio frame matches the terminal ID included in the determination result of the server 300 and the ACK transmission flag indicates ON (step S803; ON), the control unit 202 determines that the ACK is transmitted (step S804). Specifically, if the ACK transmission flag for the terminal ID of the device that has transmitted the frame indicates ON (step S803; ON), the control unit 202 determines that the ACK is transmitted (step S804) . Note that steps S803 and S804 are examples of a control procedure for transmission set forth in the scope of claims.

Thus, if it is determined that the ACK is transmitted (step S804), the control unit 202 notifies the server 300 of the determination result (ACK has been transmitted) (step S809). Specifically, pieces of information in the same row as the base station ID 413 "200" illustrated in Fig. 11 are transmitted as a reception result (stepS809). Note that this notification may be provided before it is determined that the ACK is transmitted.

If the terminal ID included in the received radio frame does not match the terminal ID included in the determination result of the server 300, or if the terminal IDs match and the ACK transmission flag indicates OFF (step S803; OFF), the processing proceeds to step S805. Specifically, the ACK transmission flag for the terminal ID of the device that has transmitted the frame indicates OFF (step S803; OFF), the control unit 202 compares the received power of the received frame with the threshold TH1 (stepS805) . Then, if the received power is larger than the threshold TH1 (step S805; Yes), the control unit 202 determines that the ACK is transmitted (step S804) .

If the received power is equal to or less than the threshold TH1 (step S805; No), the control unit 202 compares the received power of the received frame with the threshold TH2 (step S806). Then, if the received power is less than the threshold TH2 (step S806; Yes), the control unit 202 determines that the ACK is not transmitted (step S802).

If the received power is equal to or more than the threshold TH2 (step S806; No), the control unit 202 determines that ACK transmission determination is performed in the server 300 (step S807) . In this case, the control unit 202 suspends the transmission of the ACK during the period in which the server 300 waits for the determination result (step S808). In this case, the server 300 is notified of the determination result (indicating that the transmission of the ACK is suspended) (step S809) . Specifically, pieces of information in the same row as the base station ID 413 "210" illustrated in Figs. 10 and 11 are transmitted as a reception result (step S809). Note that this notification may be provided before it is determined that the transmission of the ACK is suspended.

### [Operation Example of Base Station (Example of Transmission of Radio ACK Frame)]

Upon determining that the ACK is transmitted, the control unit 202 of the base station 200 generates a radio ACK frame. Further, the radio communication unit 201 of the base station 200 transmits the generated radio ACK frame to the radio communication apparatus 100. Note that the control unit 202 of the base station 200 controls the radio ACK frame for the radio data frame to be transmitted immediately after the radio data frame is received.

In this case, the configuration of the radio ACK frame is similar to the configuration of the radio data frame illustrated in Fig. 5. In this regard, however, an identifier indicating the radio ACK frame is stored in the field of the information 404 illustrated in Fig. 5.

Thus, the control unit 202 of the base station 200 determines that a predetermined condition is satisfied in a case where the received power of data has a value within a predetermined range and the received power of the data reaches a maximum value in the plurality of reception devices (base stations) that have received the data. Thus, in a case where it is determined that the predetermined condition is satisfied, the control unit 202 of the base station 200 performs control to transmit the ACK for the data to the radio communication apparatus 100 on the basis of a reception timing of retransmitted data of the data.

For example, in a case where the received power of the data has a value within the predetermined range, the control unit 202 of the base station 200 transmits information (reception result) about the data to the server 300. Further, the control unit 202 of the base station 200 can determine whether it is necessary to transmit the ACK for the data on the basis of the result of selection processing in the server 300.

Specifically, in a case where the received power of the data is larger than the threshold TH1, the control unit 202 of the base station 200 performs control to transmit the ACK on the basis of the reception timing of the data. Further, in a case where the received power of the data is smaller than the threshold TH1 and is larger than the threshold TH2, the control unit 202 of the base station 200 performs control to transmit the ACK at the reception timing of retransmitted data on the basis of whether the data satisfies the predetermined condition. Further, in a case where the received power of the data is smaller than the threshold TH2, the control unit 202 of the base station 200 performs control not to transmit the ACK.

### [Operation Example of Server]

Fig. 15 is a flowchart illustrating an example of a processing procedure of determination processing executed by the server 300 in the first embodiment of the present technology.

First, the selection unit 302 of the server 300 acknowledges flags included in the reception result transmitted from each base station, and confirms whether a flag indicating "transmit" is included in the flags (flags 414 illustrated in Figs. 10 and 11) (step S811).

Further, if a flag indicating "transmit" is present (step S811; Yes), the selection unit 302 selects, as target base stations, the base stations that have transmitted the reception result including the flag indicating "transmit" (step S812) .

Subsequently, the selection unit 302 extracts a base station having a maximum value of received power from the target base stations (step S813) . Specifically, the selection unit 302 extracts the received power of the maximum value from the received power (received power 412 illustrated in Figs. 10 and 11) included in the reception result transmitted from each target base station. Further, the selection unit 302 extracts the target base station that has transmitted the reception result including the received power of the maximum value (step S813) .

Subsequently, the selection unit 302 selects the extracted target base station as the base station to transmit the ACK (step S814). Subsequently, the selection unit 302 turns on the ACK transmission flag for the base station selected as the base station to transmit the ACK, and turns off the ACK transmission flag for the other base stations (step S817) . Further, the communication unit 301 transmits the determination result (the terminal ID 421 and the ACK transmission flag 422 illustrated in Fig. 12) set as described above to each base station.

Further, if a flag indicating "transmit" is not present in the flags included in the reception result transmitted from each base station (step S811; No), the selection unit 302 extracts the base station having the maximum value of the received power from the base stations that have transmitted the reception result (step S815). Specifically, the selection unit 302 extracts the received power of the maximum value from the received powers included in the reception results transmitted from each base station, and extracts the base station that has transmitted the reception result including the received power of the maximum value (step S815) .

Subsequently, the selection unit 302 selects the extracted base station as the base station to transmit the ACK (step S816) . Subsequently, the selection unit 302 turns on the ACK transmission flag for the base station selected as the base station to transmit the ACK, and turns off the ACK transmission flag for the other base stations (step S817) . Further, the communication unit 301 transmits the determination result (the terminal ID 421 and the ACK transmission flag 422 illustrated in Fig. 12) set as described above to each base station.

An example where the server 300 has received the reception result illustrated in Fig. 10 will now be described.

In the reception result illustrated in Fig. 10, both the base stations 200 and 210 suspend the transmission of the ACK. Accordingly, the selection unit 302 acknowledges that there is no base station that has transmitted the ACK (step S811; No). Subsequently, the selection unit 302 selects the base station 200 that has reported the maximum received power from all the base stations 200 and 210 that have transmitted the reception result (steps S815 and S816) . Note that steps S811 to S816 are examples of a selection procedure set forth in the scope of claims.

Subsequently, the selection unit 302 sets the ACK transmission flags (the ACK transmission flag "ON" for the base station 200 and the ACK transmission flag "OFF" for the base station 210) on the basis of on the result of the selection (step S817). Subsequently, the communication unit 301 transmits, to the base stations 200 and 210, the determination result in which the ACK transmission flag is set.

Next, an example where the server 300 has received the reception result illustrated in Fig. 11 will be described.

In the reception result illustrated in Fig. 11, the flag indicating that the ACK has been transmitted from the base station 200 is reported. Accordingly, the selection unit 302 acknowledges that the base station 200 that has transmitted the ACK is present (step S811). Subsequently, as a result of the acknowledgement, the selection unit 302 limits the determination target base station to the base station 200 that has transmitted the ACK (step S812) . In this case, the number of target base stations is one. Accordingly, the base station 200 is selected as the base station to transmit the ACK (steps S813 and S814).

An example where the number of base stations (target base stations) indicating that the ACK has been transmitted is one is herein illustrated. However, if a plurality of base stations (target base stations) indicating that the ACK has been transmitted is present, the target base station that has reported the maximum received power is selected (steps S813 and S814).

Subsequently, the selection unit 302 sets the ACK transmission flag (the ACK transmission flag "ON" for the base station 200 and the ACK transmission flag "OFF" for the base station 210) on the basis of the result of the selection (step S817). Subsequently, the communication unit 301 transmits, to the base stations 200 and 210, the determination result in which the ACK transmission flag is set.

Thus, the selection unit 302 of the server 300 selects a base station to transmit the ACK for the data at a reception timing of retransmitted data of the data from the radio communication apparatus 100 on the basis of the received power of the data in the plurality of base stations. For example, the selection unit 302 can select the base station to transmit the ACK on the basis of the received power (received power 412 illustrated in Fig. 11) and transmission information (flag 414 illustrated in Fig. 11) included in the reception result. Specifically, the selection unit 302 determines whether the base station that has transmitted the ACK is present on the basis of the transmission information (flag 414 illustrated in Fig. 11). Further, in a case where the base station that has transmitted the ACK is present, the selection unit 302 selects the next base station to transmit the ACK from among the base stations that have transmitted the ACK on the basis of the received power of the data in the reception device that has transmitted the ACK. Further, in a case where the base station that has transmitted the ACK is not present, the selection unit 302 selects the base station to transmit the ACK on the basis of the received power of the data in the plurality of base stations.

Thus, the transmission device (radio communication apparatus 100) transmits data to the reception device (base stations 200 and 210), and receives an acknowledgement response (ACK) for the data from the reception device (base stations 200 and 210).

Further, the reception device (base stations 200 and 210) transmits information (reception result) about the received power of the data to the information processing apparatus (server 300). Further, the reception device (base stations 200 and 210) determines whether the acknowledgement response (ACK) for the data is transmitted to the transmission device (radio communication apparatus 100) on the basis of the result of selection processing in the information processing apparatus (server 300).

Further, the information processing apparatus (server 300) receives information (reception result) about the received power of the data in the plurality of reception devices (base stations 200 and 210). Further, the information processing apparatus (server 300) selects, from among the plurality of reception devices, a reception device to transmit an acknowledgement response (ACK) for the data at a reception timing of retransmitted data of the data from the transmission device (radio communication apparatus 100) on the basis of the received power. Further, the information processing apparatus (server 300) notifies the plurality of reception devices of the determination result.

Note that this example illustrates a case where the selection unit 302 of the server 300 determines whether the base station has transmitted the ACK on the basis of the flag 414 (Figs. 10 and 11) included in the reception result transmitted from the base station. In this case, it is also assumed that the selection unit 302 of the server 300 recognizes the thresholds TH1 and TH2 which are set to each base station. In this case, the selection unit 302 of the server 300 can determine whether the base station has transmitted the ACK on the basis of the received power 412 (Figs. 10 and 11) included in the reception result transmitted from the base station. In this case, the flag 414 (Figs. 10 and 11) included in the reception result may be omitted.

### <2. Second Embodiment>

A second embodiment of the present technology illustrates an example where the amount of information in a radio data frame is reduced to thereby reduce a time required for transmitting data and reduce power consumption in a radio communication apparatus.

Note that the configuration of each device in the second embodiment of the present technology is substantially the same as that of the radio communication apparatus 100 and the base stations 200 and 210 illustrated in Fig. 1 and the like. Accordingly, parts that are the same as those of the first embodiment of the present technology are denoted by the same reference numerals as those in the first embodiment of the present technology, and the descriptions of the same parts are partially omitted.

For example, in the radio data frame illustrated in Fig. 5, it can be considered that a reduction in time required for transmitting data and a reduction in power consumption in the radio communication apparatus 100 can be achieved by reducing the amount of information.

For example, the field of the terminal ID 403 (illustrated in Fig. 5) in the radio data frame is omitted, and instead, the pattern of the preamble 401 is changed to a different pattern for each radio communication apparatus. Thus, the amount of information in the radio data frame can be reduced.

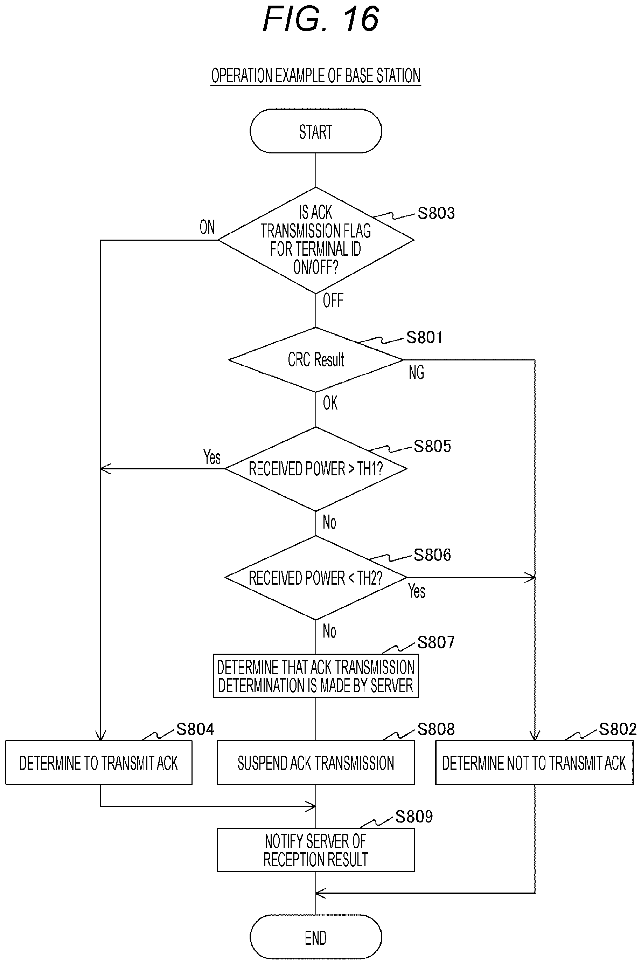

In this case, the radio communication unit 201 of the base station 200 calculates the correlation between a plurality of preamble patterns and a received signal, and the ID (terminal ID) of the radio communication apparatus can be determined on the basis of the preamble pattern having a largest correlation value obtained by the calculation. Fig. 16 illustrates an operation example of the base station 200 in this case.

### [Operation Example of Base Station]

Fig. 16 is a flowchart illustrating an example of a processing procedure of ACK transmission determination processing in the base station 200 in the second embodiment of the present technology. Fig. 16 illustrates an example where the control unit 202 of the base station 200 performs ACK transmission determination processing on the basis of the determination result of the server 300.

Note that Fig. 16 is a modified example of Fig. 14. Specifically, steps S801 and S803 illustrated in Fig. 14 are replaced. The other steps are the same as those illustrated in Fig. 14, the same steps as those illustrated in Fig. 14 are denoted by same reference numerals and descriptions thereof are omitted.

As described above, the calculation of the correlation between the plurality of preamble patterns and the received signal enables determination of the ID (terminal ID) of the radio communication apparatus that has transmitted the received frame. Accordingly, the control unit 202 of the base station 200 first determines whether the ACK transmission flag for the terminal ID obtained by the determination indicates OFF among the terminal IDs included in the determination result transmitted from the server 300 (step S803).

If the ACK transmission flag for the terminal ID indicates ON (step S803; ON), the processing proceeds to step S804. On the other hand, if the ACK transmission flag for the terminal ID indicates OFF (step S803; OFF), the control unit 202 of the base station 200 performs ACK transmission determination on the basis of the result of the CRC (step S801).

Thus, the terminal ID of the device that has transmitted the frame can be discriminated by the determination using preamble patterns. Accordingly, the determination based on the ACK transmission flag can be performed before the result of the CRC is obtained.

Thus, according to the embodiments of the present technology, the base stations 200 and 210 that transmit the ACK and the server 300 that performs ACK transmission determination can be connected via a general-purpose line (e.g., Internet connection) . Further, the base stations 200 and 210 can transmit the ACK according to the timing of data retransmitted by the radio communication apparatus 100 on the basis of the ACK transmission determination of the server 300. This results in a reduction of the time for radio communication apparatus 100 to wait for the ACK and a reduction of power consumption. Further, in a case where data transmitted from the radio communication apparatus 100 is received by the plurality of base stations 200 and 210, an interference caused when the plurality of base stations 200 and 210 transmits the ACK can be avoided.

Thus, in an environment in which a plurality of base stations is present, the base stations to transmit an acknowledgement response can be appropriately decided.

Note that the embodiments of the present technology illustrate an example where the device (server 300) different from the base stations 200 and 210 that receive the data from the radio communication apparatus 100 performs base station selection processing. However, one of the base stations 200 and 210 that receive the data from the radio communication apparatus 100 may acquire the reception result from another device to perform base station selection processing, and may transmit the determination result to the other device.

Further, the radio communication apparatus 100, the base stations 200 and 210, and the server 300 according to the embodiments of the present technology can be applied to devices used in various fields. For example, the radio communication apparatus 100, the base stations 200 and 210, and the server 300 can be applied to a radio device (e.g., a car navigation apparatus or a smartphone) used in a vehicle. Further, for example, the radio communication apparatus 100, the base stations 200 and 210, and the server 300 can be applied to vehicle-to-vehicle communication and road-to-vehicle communication (V2X (vehicle to X)). Further, for example, the radio communication apparatus 100, the base stations 200 and 210, and the server 300 can be applied to a learning device (e.g., a tablet terminal) used in education fields. Further, for example, the radio communication apparatus 100, the base stations 200 and 210, and the server 300 can be applied to a radio device (e.g., a terminal of a cattle management system) used in agricultural fields. Similarly, for example, the radio communication apparatus 100, the base stations 200 and 210, and the server 300 can be applied to radio devices used in sports fields, medical fields, and the like.

### <3. Application Examples>

The technology according to the present disclosure can be applied to various products. For example, the radio communication apparatus 100 and the base stations 200 and 210 may be implemented as a mobile terminal, such as a smartphone, a tablet personal computer (PC), a laptop PC, a portable game terminal, or a digital camera, a fixed terminal, such as a television receiver, a printer, a digital scanner, or a network storage, or an in-vehicle terminal such as a car navigation apparatus. Further, the radio communication apparatus 100 and the base stations 200 and 210 maybe implemented as a terminal for performing Machine To Machine (M2M) communication (which is also referred to as a machine type communication (MTC) terminal), such as a smart meter, a vending machine, a remote monitoring device, or a Point Of Sale (POS). Furthermore, the radio communication apparatus 100 and the base stations 200 and 210 may be radio communication modules (e.g., integrated circuit modules including one die) mounted on these terminals.

On the other hand, for example, the base stations 200 and 210 may be implemented as a radio LAN access point (also referred to as a radio base station) which has a router function or does not have a router function. Further, the base stations 200 and 210 may be implemented as a mobile radio LAN router. Further, the base stations 200 and 210 may be radio communication modules (e.g., integrated circuit modules including one die) mounted on these devices.

### [3-1. First Application Example]

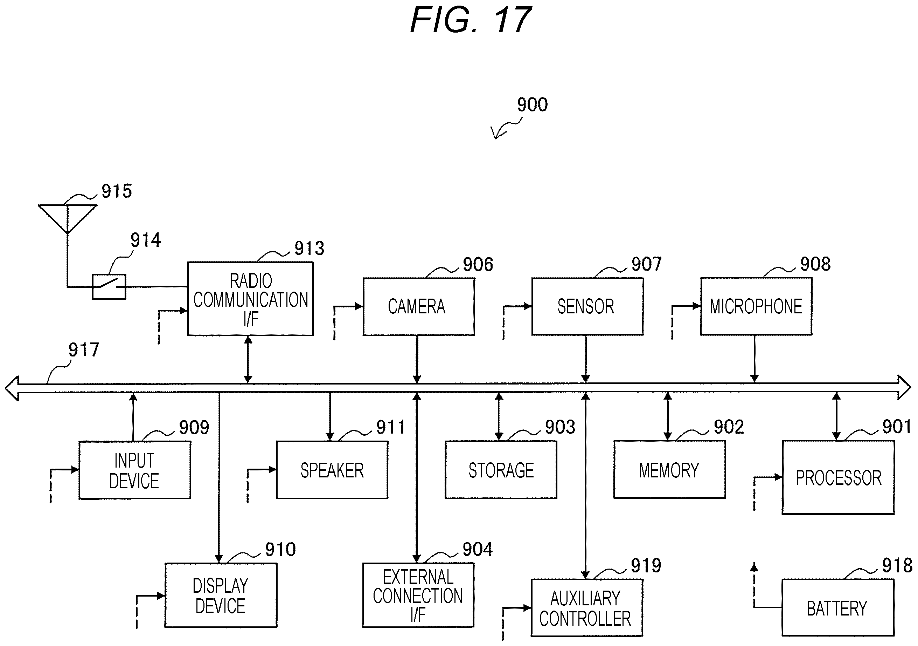

Fig. 17 is a block diagram illustrating an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a radio communication interface 913, an antenna switch 914, an antenna 915, a bus 917, a battery 918, and an auxiliary controller 919.

The processor 901 may be, for example, a central processing unit (CPU) or a System on Chip (SoC), and controls functions of an application layer and other layers of the smartphone 900. The memory 902 includes a random access memory (RAM) and a read only memory (ROM), and stores programs and data to be executed by the processor 901. The storage 903 may include a storage medium such as a semiconductor memory or a hard disk. The external connection interface 904 is an interface for connecting an external device, such as a memory card or a universal serial bus (USB), to the smartphone 900.

The camera 906 includes an image sensor such as a charge coupled device (CCD) or a complementary metal oxide semiconductor (CMOS), and generates a captured image. The sensor 907 may include a sensor group such as a positioning sensor, a gyroscope sensor, a geometric sensor, and an acceleration sensor. The microphone 908 converts a voice input to the smartphone 900 into an audio signal. The input device 909 includes, for example, a touch sensor for detecting a touch on a screen of the display device 910, a key pad, a keyboard, a button, or a switch, and receives an operation or information input from a user. The display device 910 includes a screen such as a liquid crystal display (LCD) or an organic light emitting diode (OLED) display, and displays an output image from the smartphone 900. The speaker 911 converts the audio signal output from the smartphone 900 into a voice.

The radio communication interface 913 supports at least one of radio LAN standards, such as IEEE802.11a, 11b, 11g, 11n, 11ac, and 11ad, and executes radio communication. The radio communication interface 913 can communicate with another device via a radio LAN access point in an infrastructure mode. Further, the radio communication interface 913 can directly communicate with another device in an ad hoc mode, or a direct communication mode such as Wi-Fi Direct. Note that in Wi-Fi Direct, one of two terminals operates as an access point, unlike in the ad hoc mode, and a communication is directly established between the terminals. The radio communication interface 913 may typically include a baseband processor, a radio frequency (RF) circuit, a power amplifier, and the like. The radio communication interface 913 may be a one-chip module on which a memory for storing a communication control program, a processor for executing the program, and related circuits are integrated. The radio communication interface 913 may support not only the radio LAN system, but also other types of radio communication systems such as a short distance radio communication system, a near field radio communication system, or a cellular communication system. The antenna switch 914 switches the connection destination of the antenna 915 among a plurality of circuits (e.g., circuits for different radio communication systems) included in the radio communication interface 913. The antenna 915 includes one or more antenna elements (e.g., a plurality of antenna elements constituting a MIMO antenna), and is used to transmit and receive radio signals via the radio communication interface 913.

Note that the present disclosure is not limited to the example of Fig. 17, and the smartphone 900 may include a plurality of antennas (e.g., an antenna for radio LAN and an antenna for a near field radio communication system) . In this case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the radio communication interface 913, and the auxiliary controller 919 to each other. The battery 918 supplies power to each block of the smartphone 900 illustrated in Fig. 17 via a power feed line which is partially indicated by a broken line in the figure . The auxiliary controller 919 actuates minimum necessary functions of the smartphone 900 in, for example, a sleep mode.

In the smartphone 900 illustrated in Fig. 17, the control unit 102 described above with reference to Fig. 2 and the control unit 202 described above with reference to Fig. 3 may be implemented on the radio communication interface 913. Further, at least some of the functions may be implemented on the processor 901 or the auxiliary controller 919. For example, the transmission of the ACK according to the timing of data retransmitted by another device on the basis of the ACK transmission determination of the server can reduce power consumption of the battery 918.

Note that the smartphone 900 may operate as a wireless access point (software AP) by executing an access point function at an application level in the processor 901. Further, the radio communication interface 913 may include a wireless access point function.

### [3-2. Second Application Example]

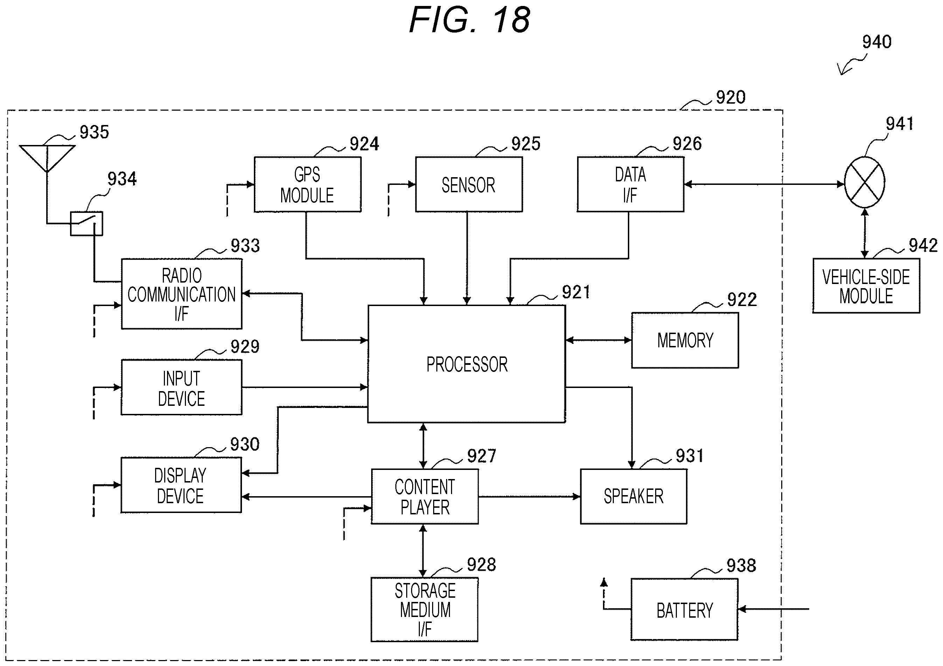

Fig. 18 is a block diagram illustrating an example of a schematic configuration of a car navigation apparatus 920 to which the technology according to the present disclosure can be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, an antenna switch 934, an antenna 935, and a battery 938.

The processor 921 may be, for example, a CPU or SoC, and controls a navigation function of the car navigation apparatus 920 and other functions. The memory 922 includes a RAM and a ROM and stores programs and data to be executed by the processor 921.

The GPS module 924 measures the position (e.g., latitude, longitude, and altitude) of the car navigation apparatus 920 by using a GPS signal received from a GPS satellite . The sensor 925 may include a sensor group such as a gyroscope sensor, a geometric sensor, and a pressure sensor. The data interface 926 is connected to an in-vehicle network 941 via, for example, a terminal, which is not illustrated, to acquire data generated by a vehicle, such as vehicle speed data.

The content player 927 reproduces a content stored in a storage medium (e.g., a CD or DVD) inserted into the storage medium interface 928. The input device 929 includes, for example, a touch sensor for detecting a touch on a screen of the display device 930, a button, or a switch, and receives an operation or information input from a user. The display device 930 includes a screen such as an LCD or OLED display, and displays a navigation function or a content to be reproduced. The speaker 931 outputs the navigation function or voice of the content to be reproduced.

The radio communication interface 933 supports at least one of radio LAN standards such as IEEE802.11a, 11b, 11g, 11n, 11ac, and 11ad, and executes radio communication. The radio communication interface 933 can communicate with another device via a radio LAN access point in the infrastructure mode. Further, the radio communication interface 933 can directly communicate with another device in the ad hoc mode, or the direct communication mode such as Wi-Fi Direct. The radio communication interface 933 may typically include a baseband processor, an RF circuit, a power amplifier, and the like. The radio communication interface 933 may be a one-chip module on which a memory for storing a communication control program, a processor for executing the program, and related circuits are integrated. The radio communication interface 933 may support not only the radio LAN system, but also other types of radio communication systems such as a short distance radio communication system, a near field radio communication system, or a cellular communication system. The antenna switch 934 switches the connection destination of the antenna 935 among a plurality of circuits included in the radio communication interface 933. The antenna 935 includes one or more antenna elements, and is used to transmit and receive radio signals via the radio communication interface 933.

Note that the present disclosure is not limited to the example of Fig. 18, and the car navigation apparatus 920 may include a plurality of antennas. In this case, the antenna switch 934 may be omitted from the configuration of the car navigation apparatus 920.

The battery 938 supplies power to each block of the car navigation apparatus 920 illustrated in Fig. 18 via a power feed line which is partially indicated by a broken line in the figure. Further, the battery 938 stores power fed from a vehicle.

In the car navigation apparatus 920 illustrated in Fig. 18, the control unit 102 described above with reference to Fig. 2 and the control unit 202 described above with reference to Fig. 3 may be implemented in the radio communication interface 933. Further, at least some of the functions may be implemented on the processor 921. For example, the transmission of the ACK according to the timing of data retransmitted by another device on the basis of the ACK transmission determination of the server can reduce power consumption of the battery 938.

Further, the radio communication interface 933 may operate as the base stations 200 and 210 described above, and may provide a radio connection to a terminal owned by the user of a vehicle.

Further, the technology according to the present disclosure may be implemented as an in-vehicle system (or a vehicle) 940 including one or more blocks of the car navigation apparatus 920 described above, the in-vehicle network 941, and a vehicle-side module 942. The vehicle-side module 942 generates vehicle-side data such as a vehicle speed, an engine rotational speed, or failure information, and outputs the generated data to the in-vehicle network 941.

### [3-3. Third Application Example]

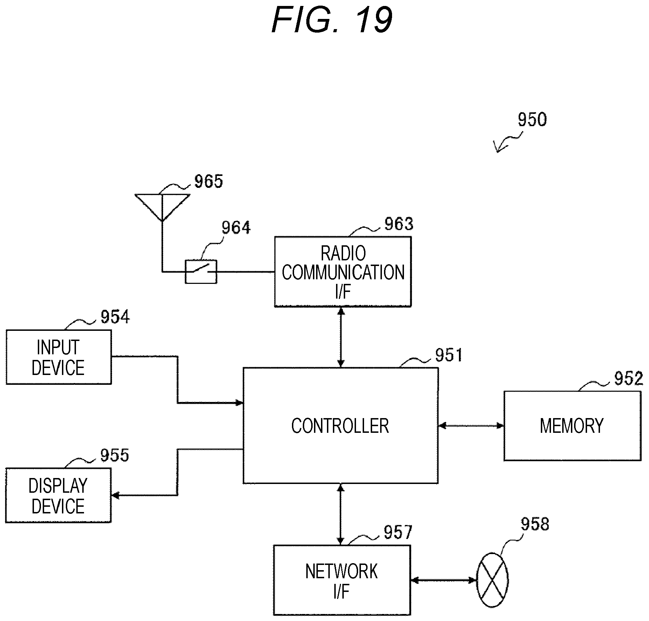

Fig. 19 is a block diagram illustrating an example of a schematic configuration of a wireless access point 950 to which the technology according to the present disclosure can be applied. The wireless access point 950 includes a controller 951, a memory 952, an input device 954, a display device 955, a network interface 957, a radio communication interface 963, an antenna switch 964, and an antenna 965.

The controller 951 may be, for example, a CPU or a digital signal processor (DSP), and actuates various functions (e.g., access limitation, routing, encryption, firewall, and log management) of an Internet Protocol (IP) layer and upper layers of the wireless access point 950. The memory 952 includes a RAM and a ROM, and stores programs to be executed by the controller 951, and various control data (e.g., a terminal list, a routine table, an encryption key, security setting, and a log).

The input device 954 includes, for example, a button or a switch, and receives an operation from a user. The display device 955 includes an LED lamp and the like and displays an operation status of the wireless access point 950.

The network interface 957 is a wired communication interface for the wireless access point 950 to be connected to a wired communication network 958. The network interface 957 may include a plurality of connection terminals . The wired communication network 958 may be a LAN such as Ethernet (registered trademark), or a wide area network (WAN).

The radio communication interface 963 supports at least one of radio LAN standards, such as IEEE802.11a, 11b, 11g, 11n, 11ac, and 11ad, and provides a radio connection as an access point to a neighborhood terminal. The radio communication interface 963 may typically include a baseband processor, an RF circuit, a power amplifier, and the like. The radio communication interface 963 is a one-chip module on which a memory for storing a communication control program, a processor for executing the program, and related circuits are integrated. The antenna switch 964 switches the connection destination of the antenna 965 among a plurality of circuits included in the radio communication interface 963. The antenna 965 includes one or more antenna elements, and is used to transmit and receive radio signals via the radio communication interface 963.

In the wireless access point 950 illustrated in Fig. 19, the control unit 202 described above with reference to Fig. 3 may be implemented in the radio communication interface 963. Further, at least some of these functions may be implemented in the controller 951. For example, the transmission of the ACK according to the timing of data retransmitted by another device on the basis of the ACK transmission determination of the server can reduce power consumption.

Note that the embodiments described above are illustrated by way of example for embodying the present technology, and the matter in the embodiments and the subject matter in the scope of claims have a correspondence relationship. Similarly, the subject matter in the scope of claims and the matter in the embodiments of the present technology that has the same name as that of the subject matter have a correspondence relationship. However, the present technology is not limited to the embodiments and can be embodied in various modifications of the embodiments without departing from the scope of the present technology.

Further, the processing procedure described in the above embodiments may be treated as a method including a series of procedures, a program for causing a computer to execute the series of procedures, or as a storage medium storing the program. As such a recording medium, for example, a compact disc (CD), a minidisk (MD), a digital versatile disc (DVD), a memory card, or a Blu-ray (registered trademark) disc may be used.

Note that the advantageous effects described herein are illustrated by way of example only and are not limited, and other advantageous effects may be provided.

Note that the present technology can also employ the following configurations.
(1) A radio communication apparatus including a control unit configured to perform control in such a manner that, in a case where data transmitted from a first radio communication apparatus satisfies a predetermined condition, an acknowledgement response for the data is transmitted to the first radio communication apparatus on the basis of a reception timing of retransmitted data of the data transmitted from the first radio communication apparatus.
(2) The radio communication apparatus according to (1), in which the control unit determines that the predetermined condition is satisfied in a case where received power of the data has a value within a predetermined range and the received power of the data reaches a maximum value in a plurality of reception devices including the radio communication apparatus having received the data.
(3) The radio communication apparatus according to (1), in which the control unit transmits information about the data to an information processing apparatus configured to perform selection processing for selecting a reception device having a maximum value for the received power of the data in a plurality of reception devices having received data, in a case where the received power of the data has a value within a predetermined range, and determines whether to transmit the acknowledgement response for the data to the first radio communication apparatus, on the basis of a result of the selection processing in the information processing apparatus.
(4) The radio communication apparatus according to (2) or (3), in which the plurality of reception devices and the information processing apparatus are connected with a general-purpose line.
(5) The radio communication apparatus according to (1), in which the control unit performs control in such a manner that, in a case where received power of the data is larger than a first threshold, the acknowledgement response is transmitted on the basis of the reception timing of the data; in a case where the received power of the data is smaller than the first threshold and is larger than a second threshold that is smaller than the first threshold, the acknowledgement response is transmitted at the reception timing of the retransmitted data on the basis of whether the data satisfies the predetermined condition; and in a case where the received power of the data is smaller than the second threshold, the acknowledgement response is not transmitted.
(6) The radio communication apparatus according to (5), in which the first threshold and the second threshold are set on the basis of a position between a plurality of reception devices including the radio communication apparatus that receives the data.
(7) An information processing apparatus including:
   a communication unit configured to receive data from a radio communication apparatus, the communication unit being connectable to a plurality of reception devices to transmit an acknowledgement response for the data to the radio communication apparatus; and
   a selection unit configured to select, from among the plurality of reception devices, a reception device to transmit an acknowledgement response for the data at a reception timing of retransmitted data of the data from the radio communication apparatus, on the basis of received power of the data in the plurality of reception devices.
(8) The information processing apparatus according to (7), in which
   the reception device transmits, to the information processing apparatus, the received power of the data and transmission information indicating whether the acknowledgement response for the data is transmitted, as a reception result of the data, and
   the selection unit selects a reception device to transmit the acknowledgement response on the basis of the received power and the transmission information included in the reception result.
(9) The information processing apparatus according to (8), in which
   the selection unit determines whether reception devices having transmitted the acknowledgement response are present on the basis of the transmission information,
   in a case where the reception devices having transmitted the acknowledgement response are present, the selection unit selects a reception device to subsequently transmit the acknowledgement response from among the reception devices having transmitted the acknowledgement response, on the basis of the received power of the data in the reception devices having transmitted the acknowledgement response, and
   in a case where the reception devices having transmitted the acknowledgement response are not present, the selection unit selects a reception device to transmit the acknowledgement response on the basis of the received power of the data in the plurality of reception devices.
(10) A radio communication apparatus including:
   a radio communication unit configured to transmit data to a reception device and receive an acknowledgement response for the data from the reception device; and
   a control unit configured to determine that transmission of the data is successful in a case where the acknowledgement response for the data is received from the reception device after retransmitted data of the data is transmitted to the reception device.
(11) A communication system including:
   a transmission device configured to transmit data to a reception device and receive an acknowledgement response for the data from the reception device;
   a reception device configured to transmit information about received power of the data to an information processing apparatus and determine whether to transmit the acknowledgement response for the data to the transmission device on the basis of a result of selection processing in the information processing apparatus; and
   an information processing apparatus configured to select, from among a plurality of reception devices, a reception device to transmit the acknowledgement response for the data at a reception timing of retransmitted data of the data from the transmission device, on the basis of the received power of the data in the plurality of reception devices, and to notify the plurality of reception devices of a result of the selection.
(12) An information processing method including a control procedure for transmitting, in a case where data transmitted from a first radio communication apparatus satisfies a predetermined condition, an acknowledgement response for the data to the first radio communication apparatus on the basis of a reception timing of retransmitted data of the data transmitted from the first radio communication apparatus.
(13) An information processing method including a selection procedure for receiving data from a radio communication apparatus, and selecting, from among a plurality of reception devices, a reception device to transmit an acknowledgement response for the data at a reception timing of retransmitted data of the data from the radio communication apparatus, on the basis of received power of the data in a plurality of reception devices that transmits the acknowledgement response for the data to the radio communication apparatus.
(14) An information processing method including a control procedure for determining that transmission of data is successful in a case where an acknowledgement response for the data is received from a reception device after retransmitted data of the data transmitted to the reception device is transmitted to the reception device.
(15) A program for causing a computer to execute a control procedure for transmitting, in a case where data transmitted from a first radio communication apparatus satisfies a predetermined condition, an acknowledgement response for the data to the first radio communication apparatus, on the basis of a reception timing of retransmitted data of the data transmitted from the first radio communication apparatus.
(16) A program for causing a computer to execute a selection procedure for receiving data from a radio communication apparatus and selecting, from among a plurality of reception devices, a reception device to transmit an acknowledgement response for the data at a reception timing of retransmitted data of the data from the radio communication apparatus, on the basis of received power of the data in a plurality of reception devices that transmits the acknowledgement response for the data.
(17) A program for causing a computer to execute a control procedure for determining that transmission of data is successful in a case where an acknowledgement response for the data is received from a reception device after retransmitted data of the data transmitted to the reception device is transmitted to the reception device.

### REFERENCE SIGNS LIST

- 10: Communication system
- 100: Radio communication apparatus
- 101: Radio communication unit
- 102: Control unit
- 103: Sensor unit
- 200, 210: Base station
- 201: Radio communication unit
- 202: Control unit
- 203: Communication unit
- 300: Server
- 301: Communication unit
- 302: Selection unit
- 900: Smartphone
- 901: Processor
- 902: Memory
- 903: Storage
- 904: External connection interface
- 906: Camera
- 907: Sensor
- 908: Microphone
- 909: Input device
- 910: Display device
- 911: Speaker
- 913: Radio communication interface
- 914: Antenna switch
- 915: Antenna
- 917: Bus
- 918: Battery
- 919: Auxiliary controller
- 920: Car navigation apparatus
- 921: Processor
- 922: Memory
- 924: GPS module
- 925: Sensor
- 926: Data interface
- 927: Content player
- 928: Storage medium interface
- 929: Input device
- 930: Display device
- 931: Speaker
- 933: Radio communication interface
- 934: Antenna switch
- 935: Antenna
- 938: Battery
- 941: In-vehicle network
- 942: Vehicle-side module
- 950: Wireless access point
- 951: Controller
- 952: Memory
- 954: Input device
- 955: Display device
- 957: Network interface
- 958: Wired communication network
- 963: Radio communication interface
- 964: Antenna switch
- 965: Antenna

## Claims

1. A radio communication apparatus comprising a control unit configured to perform control in such a manner that, in a case where data transmitted from a first radio communication apparatus satisfies a predetermined condition, an acknowledgement response for the data is transmitted to the first radio communication apparatus on the basis of a reception timing of retransmitted data of the data transmitted from the first radio communication apparatus.

2. The radio communication apparatus according to claim 1, wherein the control unit determines that the predetermined condition is satisfied in a case where received power of the data has a value within a predetermined range and the received power of the data reaches a maximum value in a plurality of reception devices including the radio communication apparatus having received the data.

3. The radio communication apparatus according to claim 1, wherein the control unit transmits information about the data to an information processing apparatus configured to perform selection processing for selecting a reception device having a maximum value for the received power of the data in a plurality of reception devices having received data, in a case where the received power of the data has a value within a predetermined range, and determines whether to transmit the acknowledgement response for the data to the first radio communication apparatus, on the basis of a result of the selection processing in the information processing apparatus.

4. The radio communication apparatus according to claim 2, wherein the plurality of reception devices and the information processing apparatus are connected with a general-purpose line.

5. The radio communication apparatus according to claim 1, wherein the control unit performs control in such a manner that, in a case where received power of the data is larger than a first threshold, the acknowledgement response is transmitted on the basis of the reception timing of the data; in a case where the received power of the data is smaller than the first threshold and is larger than a second threshold that is smaller than the first threshold, the acknowledgement response is transmitted at the reception timing of the retransmitted data on the basis of whether the data satisfies the predetermined condition; and in a case where the received power of the data is smaller than the second threshold, the acknowledgement response is not transmitted.

6. The radio communication apparatus according to claim 5, wherein the first threshold and the second threshold are set on the basis of a position between a plurality of reception devices including the radio communication apparatus that receives the data.

7. An information processing apparatus comprising:
a communication unit configured to receive data from a radio communication apparatus, the communication unit being connectable to a plurality of reception devices to transmit an acknowledgement response for the data to the radio communication apparatus; and
a selection unit configured to select, from among the plurality of reception devices, a reception device to transmit an acknowledgement response for the data at a reception timing of retransmitted data of the data from the radio communication apparatus, on the basis of received power of the data in the plurality of reception devices.

8. The information processing apparatus according to claim 7, wherein
the reception device transmits, to the information processing apparatus, the received power of the data and transmission information indicating whether the acknowledgement response for the data is transmitted, as a reception result of the data, and
the selection unit selects a reception device to transmit the acknowledgement response on the basis of the received power and the transmission information included in the reception result.

9. The information processing apparatus according to claim 8, wherein
the selection unit determines whether reception devices having transmitted the acknowledgement response are present on the basis of the transmission information,
in a case where the reception devices having transmitted the acknowledgement response are present, the selection unit selects a reception device to subsequently transmit the acknowledgement response from among the reception devices having transmitted the acknowledgement response, on the basis of the received power of the data in the reception devices having transmitted the acknowledgement response, and
in a case where the reception devices having transmitted the acknowledgement response are not present, the selection unit selects a reception device to transmit the acknowledgement response on the basis of the received power of the data in the plurality of reception devices.

10. A radio communication apparatus comprising:
a radio communication unit configured to transmit data to a reception device and receive an acknowledgement response for the data from the reception device; and
a control unit configured to determine that transmission of the data is successful in a case where the acknowledgement response for the data is received from the reception device after retransmitted data of the data is transmitted to the reception device.

11. A communication system comprising:
a transmission device configured to transmit data to a reception device and receive an acknowledgement response for the data from the reception device;
a reception device configured to transmit information about received power of the data to an information processing apparatus and determine whether to transmit the acknowledgement response for the data to the transmission device on the basis of a result of selection processing in the information processing apparatus; and
an information processing apparatus configured to select, from among a plurality of reception devices, a reception device to transmit the acknowledgement response for the data at a reception timing of retransmitted data of the data from the transmission device, on the basis of the received power of the data in the plurality of reception devices, and to notify the plurality of reception devices of a result of the selection.

12. An information processing method comprising a control procedure for transmitting, in a case where data transmitted from a first radio communication apparatus satisfies a predetermined condition, an acknowledgement response for the data to the first radio communication apparatus on the basis of a reception timing of retransmitted data of the data transmitted from the first radio communication apparatus.

13. An information processing method comprising a selection procedure for receiving data from a radio communication apparatus, and selecting, from among a plurality of reception devices, a reception device to transmit an acknowledgement response for the data at a reception timing of retransmitted data of the data from the radio communication apparatus, on the basis of received power of the data in a plurality of reception devices that transmits the acknowledgement response for the data to the radio communication apparatus.

14. An information processing method comprising a control procedure for determining that transmission of data is successful in a case where an acknowledgement response for the data is received from a reception device after retransmitted data of the data transmitted to the reception device is transmitted to the reception device.

15. A program for causing a computer to execute a control procedure for transmitting, in a case where data transmitted from a first radio communication apparatus satisfies a predetermined condition, an acknowledgement response for the data to the first radio communication apparatus, on the basis of a reception timing of retransmitted data of the data transmitted from the first radio communication apparatus.

16. A program for causing a computer to execute a selection procedure for receiving data from a radio communication apparatus and selecting, from among a plurality of reception devices, a reception device to transmit an acknowledgement response for the data at a reception timing of retransmitted data of the data from the radio communication apparatus, on the basis of received power of the data in a plurality of reception devices that transmits the acknowledgement response for the data.

17. A program for causing a computer to execute a control procedure for determining that transmission of data is successful in a case where an acknowledgement response for the data is received from a reception device after retransmitted data of the data transmitted to the reception device is transmitted to the reception device.
